(19) Europäisches Patentamt
European Patent Office
Office européen des brevets

(11) EP 4 674 304 A1

(12) EUROPEAN PATENT APPLICATION

(43) Date of publication:
07.01.2026 Bulletin 2026/02

(51) International Patent Classification (IPC):
A43B 13/04 (2006.01)    A43B 13/12 (2006.01)
A43B 13/18 (2006.01)    A43B 13/20 (2006.01)
A43D 999/00 (2006.01)    A43D 95/10 (2006.01)

(21) Application number: 25186579.6

(22) Date of filing: 01.07.2025

(52) Cooperative Patent Classification (CPC):
A43B 13/125; A43B 13/04; A43B 13/187;
A43B 13/20; A43D 95/10; A43D 999/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 05.07.2024 DE 102024119214

(71) Applicant: adidas AG
91074 Herzogenaurach (DE)

(72) Inventors:
• DYCKMANS, Clemens
91074 Herzogenaurach (DE)
• DREXLER, Maximilian
91074 Herzogenaurach (DE)

(74) Representative: Bardehle Pagenberg
Partnerschaft mbB
Patentanwälte Rechtsanwälte
Prinzregentenplatz 7
81675 München (DE)

(54) **METHOD AND APPARATUS FOR ADAPTING PROPERTIES OF A SPORTS SHOE**

(57) The present invention relates to a method (1100) for adapting a property, particularly an energy return (150), of a shoe comprising the steps of placing (1110) the shoe in a sealable chamber; sealing (1120) the sealable chamber; applying (1130) a pressurized gas to the shoe for a time period, such that molecules of the gas are migrated into a midsole of the shoe; and relieving (1140) at least a part of the gas from the chamber.

Fig. 11

EP 4 674 304 A1

## Description

Field of the invention

The present invention relates to a method and an apparatus for adapting at least one property, particularly an energy return, of a sports shoe. The invention further relates to a sports shoe processed with the method and to a sports shoe adapted to be processed by the method.

Technical background

Aiming to maximize the performance of an athlete is at the very heart of the development and evolution of sporting goods. This especially applies to sport shoes, e.g., running shoes, where the performance of the athlete crucially depends on the performance of the shoe. Therefore, a lot of effort has been made to optimize the performance of sport shoes, particularly running shoes.

One of the crucial components of a sports shoe, particularly a running shoe, is undeniably the midsole, as it enables the athlete to cover greater distances and to achieve higher speeds while minimizing the risk of an injury. With the advent of foam and midsoles comprising foam, the performance of sports shoes was significantly increased. In particular, it was realized that midsoles comprising foam may act as shock absorbers, cushioning the impact on the athlete's feet with each stride.

To further improve the performance, different foam production methods, different materials and/or geometries have been considered. However, this results in time consuming and cost-intensive processes, rendering these approaches inefficient. In particular, developing a new base material for a foam is time consuming and involves high costs. In addition, it comes with the risk of not exceeding the performance of already existing foam solutions.

Background prior art is disclosed in US 2024 / 0 148 107 A1, US 2024 / 0 017 509 A1 and GB 2 227 921 A.

Therefore, there is a need for new technologies for changing and improving the performance of (already manufactured) shoes, particularly sports shoes, by a post-production method with less efforts, addressing at least some of the above-described disadvantages of the prior art and further improving other aspects.

Summary of the invention

A first aspect of the present invention relates to a method for adapting a property, particularly an energy return, of a shoe. The method comprises the step of placing the shoe in a sealable chamber, sealing the sealable chamber and applying a pressurized gas to the shoe for a time period, such that molecules of the gas are migrated into a midsole of the shoe. The method further comprises the step of relieving at least a part of the gas from the chamber.

The method is directed to adapt a property of the shoe. Generally, the shoe may be a complete shoe, e.g., a shoe that has been completely manufactured. Specifically, the shoe may comprise a shoe intended to be sold and/or a shoe that has already been sold and/or a shoe that has already been used. In particular, the method may be a post-production method.

In some embodiments, the property may comprise an energy return of the shoe. The energy return of the shoe may comprise an energy delivered by the shoe when the shoe changes from a compressed state to a relaxed state. In particular, the compressed state of the shoe may comprise a compressed state of a midsole. Generally, a compressed state may comprise a displacement of the shoe and/or the midsole. For example, the dimensions of the shoe and/or the midsole may change. The energy return of the shoe and/or the midsole may comprise a work performed by the shoe and/or the midsole when changing from the compressed state into the relaxed state. Changing the state of the shoe and/or midsole from a relaxed state to a compressed state and then from the compressed state to the relaxed state may be referred to as a compression-relaxation cycle. Specifically, the work that has to be performed to change the state of the shoe and/or midsole from a relaxed state to a compressed state may be larger (or equal) than the work performed by the shoe and/or the midsole when changing from the compressed state into the relaxed state. Adapting an energy return of the shoe and/or midsole may comprise adjusting a ratio between the work performed by the shoe and/or the midsole when changing from the compressed state into the relaxed state and the work that has to be performed to change the state of the shoe and/or midsole from a relaxed state to a compressed state. For example, adapting the energy return of the shoe and/or midsole may comprise increasing and/or decreasing the ratio.

For example, the shoe and/or the midsole may change from a relaxed to a compressed state due to a force applied to the shoe and/or the midsole during a walk and/or run. Typically, the shoe and/or the midsole are initially in a relaxed state. Then, due to the walking and/or running process, a force may be applied to the shoe and/or the midsole, which may result in a compression of the shoe and/or the midsole. The force may be applied until a maximal compression of the shoe and/or the midsole is reached. For example, the maximal compression of the shoe and/or the midsole may be associated with a rolling of the foot. When the shoe and/or the midsole reached the (maximal) compression, e.g., the compressed state, the shoe and/or the midsole may change from the compressed state into a relaxed state.

Changing from a compressed state into the relaxed state may comprise a decompression of the shoe and/or the midsole. A decompression of the shoe and/or the midsole may comprise a force which is essentially of opposite direction compared to the force which transformed the shoe and/or the midsole from the relaxed state into the compressed state. In general, decompression of the shoe and/or the midsole may comprise a displacement of the shoe and/or the midsole. For example, the dimensions of the shoe and/or the midsole may change.

In general, changing the state of the shoe and/or the midsole from the relaxed state into the compressed state may comprise a first force $\overrightarrow{F_1}$. Specifically, the first force $\overrightarrow{F_1}$ may comprise a first direction and/or a first absolute value. For example, the first direction may point essentially towards shoe and/or the midsole. In addition, or alternatively, changing the state of the shoe and/or the midsole from the compressed state into the relaxed state may comprise a second force $\overrightarrow{F_2}$. Specifically, the second force $\overrightarrow{F_2}$ may comprise a second direction and/or a second absolute value. For example, the second direction may point essentially away from the shoe and/or the midsole. In particular, the second force $\overrightarrow{F_2}$ may be essentially opposite to the first force $\overrightarrow{F_1}$.

Applying a force $\overrightarrow{F}$ may generally be associated with a corresponding work W. The corresponding work W may comprise an integral of the applied force along a displacement. For example, if the displacement is described be a trajectory and/or contour C, the work W may be given by the following line integral:

$$ W = \int_C \vec{F} \cdot d\,\vec{s}. $$

Changing the state of the shoe and/or the midsole from the relaxed state to the compressed state by the first force $\overrightarrow{F_1}$ may be associated with a first work $W_1$. Similarly, changing the state of the shoe and/or the midsole from the compressed state to the relaxed state by the second force $\overrightarrow{F_2}$ may be associated with a second work $W_2$. Generally, e.g., due to a conservation of energy, the first work $W_1$ may be larger than the second work $W_2$. In particular, the first work $W_1$ and the second work $W_2$ may be relates by

$$ \Delta W := W_2 - W_1 < 0. $$

In other words, more work must be done to change the state of the shoe and/or midsole from a relaxed state to a compressed state than to change the shoe and/or the midsole from the compressed state to the relaxed state. The difference between the first work and the second work, i.e., $\Delta W$, may be called an energy loss.

In general, adapting the property of the shoe and/or the midsole may comprise minimizing the energy loss of the shoe and/or the midsole. In particular, minimizing the energy loss of the shoe and/or the midsole may comprise maximizing the energy return of the shoe and/or the midsole. For example, minimizing the energy loss and/or maximizing the energy return of the shoe and/or the midsole may contribute to an increased performance of an athlete. In particular, minimizing the energy loss of the shoe and/or the midsole may minimize the energy that the athlete has to apply during walking and/or running, thereby maximizing the utilization of the energy and/or force applied by the athlete and thus optimizing the performance of the athlete.

In addition, or alternatively, the method may comprise decreasing the energy return of the shoe and/or the midsole. In addition, or alternatively, the method may comprise adapting a stiffness of the shoe and/or the midsole. In addition, or alternatively, the method may comprise adapting a linearity of a stress and/or strain curve associated with the shoe and/or the midsole. Generally, decreasing the energy return of the shoe and/or the midsole the energy return may be adjusted and/or adapted according to the needs of the individual athlete. For example, a too high energy return and/or a too low energy loss may result in an unfamiliar walking and/or running sensation for the athlete. Thus, decreasing the energy return and/or enlarging the energy loss of the shoe and/or the midsole may contribute to an enhanced comfort and thereby optimizing the performance of the athlete.

The method comprises the step of applying a pressurized gas to the shoe for a time period, such that molecules of the gas are migrated into a midsole of the shoe. Migrating molecules of the gas into the midsole of the shoe may comprise a diffusion of molecules of the gas into the midsole. Specifically, migrating molecules of the gas into the midsole of the shoe may comprise a temporary deposition of molecules of the gas into the midsole of the shoe. For example, migrating and/or depositing molecules of the gas into the shoe and/or the midsole may comprise increasing a weight of the shoe and/or the midsole. In particular, the molecules of the gas migrated and/or deposited into the shoe and/or the midsole may increase the weight of the shoe and/or midsole. For example, the weight of the shoe and/or midsole may increase by at least 1%, preferably at least 1.5%, more preferably at least 2%, even more preferably at least 2.5%, most preferably at least 3% of the weight of the shoe and/or the midsole. In some embodiments, the weight of the shoe and/or the midsole may increase by an amount in the range of 2% to 4% of the weight of the shoe and/or the midsole.

In some embodiments, temporary depositing molecules of the gas may comprise a deposition of molecules for at least 1 hour, preferably at least 6 hours, more preferably at least 12 hours, even more, preferably at least 18 hours, most preferably for at least 24 hours. For example, the molecules may migrate out of the midsole due to diffusion. The adaption of the properties of the shoe and/or the midsole may be based on the deposition of molecules of the gas in the midsole. For example, increasing the energy return of the shoe may comprise a temporary increase in the energy return of the shoe.

Generally, adapting the energy return of the shoe may comprise adapting an elasticity of at least a part of the shoe. In particular, adapting the energy return of the shoe may comprise adapting an elasticity of the midsole of the shoe.

The elasticity of the shoe and/or the midsole may comprise an ability of the shoe and/or the midsole to resist a distorting influence and to return to its original size and/or shape when that influence and/or force is removed. For example, the force may be the first force, changing the shoe and/or the midsole from the relaxed state to a compressed state. Adapting an elasticity of at least a part of the shoe and/or the midsole may comprise adapting an elastic modulus associated with the shoe and/or the midsole.

For example, adapting the elasticity of at least a part of the shoe and/or the midsole may comprise adapting a storage modulus of at least a part of the shoe and/or the midsole. In particular, the storage modulus E' may comprise a description and/or a quantification of an amount of energy that is stored in an elastic structure of the shoe and/or the midsole. The storage modulus E' may comprise the elastic portion of the energy. Generally, a higher storage modulus E' may comprise a higher energy storage capability of the shoe and/or the midsole. In some embodiments, adapting the elasticity of at least a part of the shoe and/or the midsole may comprise increasing the storage modulus E' associated with the shoe and/or the midsole.

In addition, or alternatively, adapting the elasticity of at least a part of the shoe and/or the midsole may comprise adapting a loss modulus E" of at least a part of the shoe and/or the midsole. In particular, the loss modulus E" may comprise a description and/or a quantification of an amount of energy that is dissipated by the shoe and/or the midsole. For example, the amount of energy that is dissipated by the shoe and/or the midsole may be dissipated as heat. The loss modulus E" may represent a viscous portion of the energy. Generally, a lower loss modulus E" may comprise that less energy is dissipated, e.g., dissipated as heat, by the shoe and/or the midsole. In some embodiments, adapting the elasticity of at least a part of the shoe and/or the midsole may comprise decreasing the loss modulus E" associated with the shoe and/or the midsole. Generally, the storage modulus E' and the loss modulus E" may be combined as a tensile and/or damping factor $\tan(\delta)$. The tensile and/or damping factor $\tan(\delta)$ may be defined as

$$\tan(\delta) := \frac{E''}{E'}.$$

In other words, the tensile and/or damping factor $\tan(\delta)$ may comprise a ratio between the loss modulus E" and the storage modulus E'. Generally, the tensile and/or loss modulus may comprise an indication of the relative degree of the energy dissipated by the shoe and/or midsole. In some embodiments, adapting the elasticity of at least a part of the shoe and/or the midsole may comprise adapting the tensile and/or damping factor of the shoe and/or midsole. In particular, adapting the elasticity of at least a part of the shoe and/or midsole may comprise decreasing the tensile and/or damping factor.

Increasing the storage modulus of at least a part of the shoe and/or midsole and/or decreasing the loss modulus of at least a part of the shoe and/or the midsole and/or decreasing the tensile and/or damping factor of at least a part of the shoe and/or midsole may increase the energy return of the shoe. In particular, the energy loss of the shoe and/or the midsole may be at least partially based on the storage modulus and/or the loss modulus and/or the tensile and/or damping factor of the shoe and/or midsole. For example, decreasing the loss modulus may minimize the energy dissipated as heat, thereby maximizing the energy that can be delivered by the shoe and/or midsole and thus optimizing the energy return of the shoe, e.g., the energy which is lost in a compression-relaxation cycle may comprise the energy dissipated as heat.

In general, the midsole of the shoe may comprise a foam material. In particular, the foam material may comprise open cell foam. In addition, or alternatively, the foam material may comprise closed cell foam. Specifically, the foam material may comprise ethylene-vinyl acetate. In addition, or alternatively, the foam material may comprise thermoplastic polyurethane. In addition, or alternatively, the foam material may comprise thermoplastic copolyester. In addition, or alternatively, the foam material may comprise polyether block amide.

The midsole of the shoe may comprise a foam material. For example, a portion of the midsole may comprise foam material. In addition, or alternatively, the complete midsole may comprise foam material. For example, the foam material may be essentially uniformly distributed across the midsole of the shoe.

Using a midsole which at least partially comprises foam may contribute to an improved energy return of the shoe. For example, the foam material may comprise an elasticity contributing to an improved energy return of the shoe, e.g., a storage modulus and/or a loss modulus and/or a tensile contributing to an improved energy return of the shoe.

In addition, or alternatively, using a foam material may enhance the migration of the molecules of the gas into the midsole, when the pressurized gas is applied to the shoe for a period of time. In particular, the foam material may be such that the number of molecules migrated into the midsole is maximized. Maximizing the migration of molecules of the gas into the midsole may maximize the energy return of the shoe and/or the midsole and/or minimizes the energy loss of the shoe and/or the midsole, e.g., by optimizing elasticity properties of the shoe and/or the midsole, e.g., maximizing the storage modulus and/or minimizing the loss modulus and/or minimizing the tensile and/or damping factor of the shoe and/or the midsole.

For example, the foam material may comprise bead foam. In addition, or alternatively, the foam material may comprise block foam. In particular, the block foam may be at least partially based on a supercritical fluid foaming process.

In general, the gas may comprise air. In addition, or alternatively, the gas may comprise nitrogen. For example, the gas may be pure nitrogen. In addition, or alternatively, the gas may comprise oxygen. For example, the gas may be pure oxygen. In addition, or alternatively, the gas may comprise carbon dioxide. For example, the gas may be pure carbon dioxide.

The pressurized gas applied to the shoe comprises molecules. For example, the gas may comprise different molecules, e.g., the gas may comprise air. In particular, if the gas comprises air, the air may comprise air from an ambient environment. For example, air may comprise at least a part of the atmosphere of the earth. In some embodiments, the air comprises nitrogen molecules and/or oxygen molecules and/or carbon dioxide molecules and/or argon molecules. For example, air may comprise nitrogen molecules, wherein the amount of nitrogen molecules is in the range of 70% to 80%. In addition, or alternatively, air may comprise oxygen molecules, wherein the amount of oxygen molecules is in the range of 15% to 25%.

Generally, applying a pressurized gas to the shoe may comprise applying the gas to the shoe at a pressure higher than or equal to an atmospheric air pressure. For example, applying a pressurized gas to the shoe may comprise applying the gas to the shoe at a pressure of at least 1 bar.

In addition, or alternatively, the pressurized gas may comprise nitrogen molecules. For example, the gas may comprise pure nitrogen. Comprising pure nitrogen may comprise that the gas essentially comprises nitrogen molecules only. Essentially comprising nitrogen molecules only may comprise that at least 90%, preferably at least 95%, more preferably at least 98%, even more preferably at least 99%, most preferably at least 99.9% of the gas comprises nitrogen molecules. In other words, a gas comprising pure nitrogen may essentially comprise no other (gas) molecules.

In addition, or alternatively, the pressurized gas may comprise oxygen molecules. For example, the gas may comprise pure oxygen. Comprising pure oxygen may comprise that the gas essentially comprises oxygen molecules only. Essentially comprising oxygen molecules only may comprise that at least 90%, preferably at least 95%, more preferably at least 98%, even more preferably at least 99%, most preferably at least 99.9% of the gas comprises oxygen molecules. In other words, a gas comprising pure oxygen may essentially comprise no other (gas) molecules.

Using a gas comprising air and/or nitrogen and/or oxygen, preferably pure nitrogen and/or pure oxygen, and/or carbon dioxide may enhance the migration of the molecules of the respective gasses into the midsole of the shoe. For example, the air and/or nitrogen and/or oxygen and/or carbon dioxide may maximize the diffusion of the respective gas molecules into the shoe and/or the midsole of the shoe. Thereby the number of molecules deposited in the shoe and/or the midsole during the migration process may be maximized. Maximizing the number of molecules deposited in the shoe and/or the midsole may optimize the adaption of the at least one property of the shoe, e.g., maximizing the number of molecules deposited in the shoe may maximize the energy return of the shoe.

In addition, or alternatively, using a gas comprising air and/or nitrogen and/or oxygen, preferably pure nitrogen and/or pure oxygen, and/or carbon dioxide may contribute to the adaption of the at least one property of the shoe. For example, using a gas comprising air and/or nitrogen and/or oxygen, preferably pure nitrogen and/or pure oxygen, and/or carbon dioxide may contribute to the adaption of the energy return of the shoe, particularly to a maximization of the energy return of the shoe and/or a minimization of the energy loss of the shoe and/or the midsole, thereby contributing to an optimal performance of the shoe and/or the midsole.

In some embodiments, by migrating and/or depositing a gas comprising air and/or nitrogen and/or oxygen, preferably pure nitrogen and/or pure oxygen, and/or carbon dioxide in the shoe and/or the midsole of the shoe the elasticity of at least a part of the shoe and/or the midsole may be adapted. For example, migrating and/or depositing a gas comprising air and/or nitrogen and/or oxygen, preferably pure nitrogen and/or pure oxygen, and/or carbon dioxide in the shoe and/or the midsole may contribute to a maximization of the storage modulus of the shoe and/or the midsole and/or may contribute to a minimization of the loss modulus and/or the tensile and/or the damping factor of the shoe and/or midsole.

Generally, the step of applying the gas may comprise applying the gas with a pressure of at least 1 bar, preferably at least 1.5 bar, more preferably at least 2 bar, most preferably at least 2.5 bar. In addition, or alternatively, the step of applying the gas may comprise applying the gas with a pressure of at most 10 bar, preferably at most 9 bar, more preferably at most 8 bar, most preferably at most 7 bar.

Applying the molecules of the gas to the shoe and/or the midsole at a pressure, preferably at a pressure of at least 1 bar, may enhance the migration of the molecules of the gas into the midsole of the shoe. In particular, applying the molecules of the gas to the shoe and/or the midsole at a pressure of at least 1 bar, preferably at least 1.5 bar, more preferably at least 2 bar, even more preferably at least 2.5 bar, most preferably at least 3 bar, may enhance the diffusion of the molecules of the gas into the midsole. Thereby, the deposition of molecules of the gas into the midsole of the shoe may be maximized and thus adapting the at least one property of the shoe may be optimized. For example, adapting the energy return of the shoe, particularly maximizing the energy return of the shoe, may be optimized. In addition, or alternatively, applying the molecules of the gas to the shoe and/or the midsole at a pressure may accelerate the migration of the molecules of the gas into the shoe and/or the midsole. Thereby, the time period during which the gas is applied to the shoe and/or the midsole may be reduced. Reducing the time period at which the gas is applied to the shoe and/or the midsole may shorten the application of the method to a shoe, thereby rendering the method more efficient.

Specifically, the pressure applied to the shoe during the time period may be essentially constant over the time period, e.g., the pressure applied to the shoe and/or the midsole over the time period may vary by at most 10%, preferably at most 7%, more preferably by at most 4%, most preferably by at most 1%. In addition, or alternatively, applying the pressurized gas to the shoe and/or the midsole may comprise applying the pressurized gas to the shoe and/or the midsole at different pressures. For example, the pressure may vary during the application of the pressurized gas to the shoe and/or the midsole. Specifically, the pressure applied to the shoe and/or the midsole may be increased in increments over time. For example, the initial pressure may essentially coincide with the atmospheric air pressure. Generally, the pressure applied to the shoe and/or the midsole may increase in discrete increments. In addition, or alternatively, the pressure applied to the shoe and/or the midsole may increase continuously over time. For example, the pressure applied to the shoe and/or midsole may increase by 0.1 to 1 bar per hour. In particular, the increase of pressure per time unit may at least partially be based on the foam material and/or the foam production process and/or a geometry of the midsole.

Increasing the pressure over time, e.g., increasing the pressure continuously and/or in discrete steps, may reduce an induced stress of the shoe and/or the midsole as the applied pressure may induce a contraction of the midsole and/or a change of dimension of the shoe and/or the midsole. In particular, applying the gas at a pressure may induce a shrinking of at least a part of the shoe and/or the midsole, which may result in stresses at intersections and/or glued connections between an upper of the shoe and the midsole and/or an outsole. Specifically, applying the gas at a pressure may induce a shrinking of components of the shoe and/or midsole comprising foam. Thus, increasing the pressure over time may minimize the induced stresses and may prevent damages of the midsole, e.g., the foam and/or a bonding of the midsole, and thereby optimized the quality of the shoe after the application of the method.

In some embodiments, when the pressurized gas comprises air, the gas may be applied to the shoe and/or the midsole with a pressure higher than the atmospheric air pressure. For example, the air may be applied with a pressure of at least 2 bar, preferably at least 4 bar, most preferably at least 6 bar.

In some embodiments, the gas may be applied at a pressure corresponding to a pressure of an ambient space. For example, the gas may be applied to the shoe and/or the midsole at a pressure corresponding to a pressure of the atmosphere of the earth. In particular, the atmospheric air pressure may comprise a pressure of approximately 1 bar. In addition, or alternatively, the gas may be applied to the shoe and/or the midsole at a pressure that is at least partially generated by charging the sealable chamber with the molecules of the pressurized gas. In other words, the shoe may be placed in the sealable chamber at atmospheric air pressure and the pressure inside the sealable chamber may increase at least partially based on a charging of the sealable chamber by the molecules of the gas.

In some embodiments, the step of applying the gas may comprise applying the gas at a first temperature. In particular, the first temperature may comprise a temperature in the range of 30°C to 100°C, preferably in the range of 40°C to 95 °C, more preferably in the range of 50°C to 90°C, even more preferably in the range of 60°C to 85°C, most preferably in the range of 70°C to 80°C.

For example, the first temperature may comprise a temperature of and/or within the sealable chamber. In addition, or alternatively, the first temperature may comprise a temperature of the shoe and/or the midsole. For example, the temperature of and/or within the sealable chamber may be such that the temperature of the shoe and/or the midsole may become the first temperature, e.g., after a certain time. Generally, the temperature may be higher than a typical room temperature, e.g., 21°C. For example, the first temperature may be at least 20°C, preferably at least 30°C, more preferably at least 40°C, most preferably at least 50°C. In some embodiments, the first temperature may be in the range of 70°C to 90°C, preferably in the range of 75°C to 85°C. Generally, the first temperature may be at least partially based on a melting temperature of the midsole, e.g., of a melting temperature of the foam material. In some embodiments, the temperature may be increased in increments over time. For example, the temperature may be increased in discrete increments over time and/or continuously over time.

Generally, the gas may be applied to the shoe and/or the midsole at a first temperature and at a pressure. For example, applying the pressurized gas to the shoe and/or midsole may comprise raising a temperature inside the sealable chamber and in parallel increasing the applied pressure.

Applying the gas to the shoe and/or the midsole at a first temperature may increase a diffusion coefficient of the shoe and/or the midsole. For example, applying the gas to the shoe and/or the midsole at a first temperature may increase a diffusion coefficient of the foam material of the midsole. In particular, a higher temperature may comprise a higher diffusion coefficient and/or a lower temperature may comprise a lower diffusion coefficient. Therefore, applying the gas to the shoe and/or midsole at a first temperature of at least 20°C, preferably at least 30°C, more preferably at least 40°C, most preferably at least 50°C may enhance the diffusion of the molecules of the gas into the shoe and/or the midsole and thus enhance the migration of molecules of the gas into the shoe and/or the midsole. Enhancing the diffusion and/or migration of the molecules of the gas into the shoe and/or midsole may contribute to the maximization of the energy return of the shoe. Furthermore, enhancing the diffusion and/or migration of the molecules of the gas into the shoe and/or midsole may reduce the time period during which the molecules of the gas have to be applied to the shoe and/or the midsole.

In general, the time period for which the gas is applied may be at least 4 hours, preferably at least 8 hours, more preferably at least 12 hours, even more preferably at least 16 hours, most preferably at least 20 hours. In addition, or alternatively, the time period for which the gas is applied may be at most 200 hours, preferably at most 180 hours, more preferably at most 160 hours, most preferably at most 140 hours.

Applying the gas for at least 4 hours, preferably at least 8 hours, more preferably at least 12 hours, even more preferably at least 16 hours, most preferably at least 20 hours to the shoe and/or the midsole may guarantee that a sufficient number of molecules of the gas migrated and/or have been deposited into the shoe and/or the midsole. Thereby, a sufficient change in the elasticity properties of the shoe and/or the midsole may be guaranteed, e.g., a sufficient increase in the storage modulus and/or a sufficient decrease in the loss modulus and/or the tensile and/or the damping factor may be guaranteed. Therefore, a sufficient increase in the energy return of the shoe and a sufficient optimization of the performance of the shoe may be guaranteed.

Applying the gas for at most 200 hours, preferably at most 180 hours, more preferably at most 160 hours, most preferably at most 140 hours may ensure that the gas is not longer applied to the shoe and/or the midsole after an equilibrium state is reached. An equilibrium state may comprise that the concentration of the molecules of the gas in the shoe and/or the midsole is essentially equal to the concentration of molecules of the gas in the sealable chamber. In addition, or alternatively, the equilibrium state may comprise that the concentration of molecules of the gas in the shoe and/or the midsole essentially remains constant, e.g., a maximal concentration of molecules of the gas in the shoe and/or the midsole may be reached. In particular, the equilibrium state may comprise that a maximal number of molecules of the gas have been deposited in the shoe and/or the midsole.

Generally, the method may further comprise the step of introducing indentations into at least a portion of the midsole. In particular, the method may comprise the step of introducing indentation into a surface structure of the at least a portion of the midsole. Specifically, a diameter of the indentations may be at least 1 μm, preferably at least 3 μm, more preferably at least 6 μm, most preferably at least 10 μm. In addition, or alternatively, the diameter of the indentations may be at most 2 mm, preferably at most 1 mm, more preferably at most 0.5 mm, most preferably at most 0.1 mm.

The step of introducing indentations into the midsole may be performed before the shoe is placed in the sealable chamber. In addition, or alternatively, the step of introducing indentations may be performed before sealing the sealable chamber. Generally, the step of introducing indentations may be performed before applying the pressurized gas to the shoe.

For example, introducing the indentations into the portion of the midsole may be at least partially based on penetrating the midsole by a needle. In particular, the needle may comprise a length of at least 1 mm, preferably at least 1.5 mm, more preferably at least 2 mm, even more preferably at least 2.5 mm, most preferably at least 3 mm. In addition, or alternatively, the depth of the indentations may be at least 1 mm, preferably at least 1.5 mm, more preferably at least 2 mm, even more preferably at least 2.5 mm, most preferably at least 3 mm. In addition, or alternatively, the depth of the indentations may be at most 2 cm, preferably at most 1.5 cm, most preferably at most 1 cm. In some embodiments, introducing the indentations into the at least portion of the midsole may be at least partially based on a laser. For example, the laser beam of the laser may be adapted to generate indentations into the at least portion of the midsole.

Introducing indentations into at least a portion of the midsole may contribute to an increase in the gas diffusion coefficient. In particular, introducing indentations into the at least portion of the midsole may increase a surface of the midsole. Increasing the surface of the midsole may increase a surface which is amenable for diffusion of the molecules of the gas. In particular, increasing the surface of the midsole may increase the surface through which the molecules of the gas may migrate into the midsole. Thereby, the indentations in the at least portion of the midsole may maximize the number of molecules of the gas deposited into the midsole. Thus, introducing indentations may contribute to an optimal adaption of the elasticity properties of the shoe and/or midsole, e.g., a maximization of the storage modulus and/or a minimization of the loss modulus and/or tensile and/or damping factor, and therefore contributes to the optimization of the energy return of the shoe.

In some embodiments, the method may comprise placing the shoe in the sealable chamber and sealing the sealable chamber. For example, after sealing the sealable chamber the temperature of the sealable chamber, e.g., the temperature of the gas inside the sellable chamber may be increased. In addition, or alternatively, the pressure inside the sealable chamber may be increased. Specifically, the temperature and the pressure may be increased in parallel. In some embodiments, the temperature and the pressure may be increased sequentially, e.g., increasing the temperature first and afterwards the pressure or vice versa. Generally, the temperature of the sealable chamber may be increased based on a melting temperature of the shoe and/or midsole. In particular, the melting temperature may comprise a melting temperature of foam comprised in the shoe and/or midsole. For example, the temperature may be increased to a temperature in the range of 30°C to 100°C, preferably in the range of 40°C to 95 °C, more preferably in the range of 50°C to 90°C, even more preferably in the range of 60°C to 85°C, most preferably in the range of 70°C to 80°C. In addition, or alternatively, the pressure may be increased to a pressure in the range of 1 to 10 bar, preferably in the range of 2 to 8 bar, more preferably in the range of 3 to 7 bar, most preferably in the range of 4 to 6 bar.

In addition, or alternatively, the method may further comprise to reduce the temperature of the sealable chamber. Specifically, the temperature of the sealable chamber may be reduced while maintaining the pressure inside the sealable chamber. For example, the temperature may be decreased based on a glass transition temperature of the shoe and/or midsole. Specifically, the glass transition temperature may comprise a glass transition temperature of the foam and/or a foam polymer of the shoe and/or midsole. In particular, the temperature may be decreased such that the temperature of the sealable chamber is in a vicinity of the glass transition temperature and/or below the glass transition temperature.

In addition, or alternatively, the method may comprise coating at least a part of the shoe and/or midsole. For example, the at least part of the shoe and/or midsole may be coated inside the sealable chamber. In particular, the at least part of the shoe and/or midsole may be coated inside the sealable chamber at the increased pressure and/or at the decreased temperature. In addition, or alternatively, the at least part of the shoe and/or midsole may be coated outside the sealable chamber, e.g., in an ambient space of the sealable chamber, e.g., at atmospheric air pressure.

A second aspect of the present invention relates to a sports shoe comprising a midsole, wherein the sports shoe, particularly the midsole, was processed by the above-described method.

The sports shoe processed by the above-described method may comprise a sports shoe that has been placed and processed in the sealable chamber, as described above. In particular, such a sports shoe may inherit the advantageous properties of the midsole described above. For example, the sports shoe may have an increased energy return and thereby optimizing the performance of an athlete wearing the sports shoe.

A third aspect of the present invention relates to a sports shoe comprising a midsole adapted to be processed by the above-described method. In particular, the midsole of the shoe comprises at least one porous surface structure, wherein the at least one porous surface structure is configured to absorb and/or to migrate at least a part of the molecules of the gas.

The midsole of the shoe, particularly the sports shoe comprises at least one porous surface structure. For example, a porous surface structure may comprise indentations and/or openings. In particular, the openings of the porous structure may be openings of the surface impermeable porous matrix. Generally, the openings may be configured such that gases, liquids and/or even foreign microscopic particles can inhabit them. Specifically, the porous surface structure may be configured to alter the gas diffusion coefficient of the midsole. In particular, the porous surface structure may be configured to increase the gas diffusion coefficient of the midsole. Increasing the gas diffusion coefficient of the midsole may enhance the migration of molecules of the gas into the midsole. For example, the number of molecules of the gas deposited into the midsole may be increased. In addition, or alternatively, the porous surface structure may contribute to an increase in the gas diffusion rate, e.g., the number of molecules deposited in the midsole in a certain time may be increased. Thus, the porous surface structure contributed to the maximization of the energy return of the shoe as well as to a reduction of the time period during which the gas has to be applied to the shoe and/or the midsole.

Specifically, the at least one porous surface structure may comprise a perforated skin layer. In particular, the perforated off skin layer may comprise indentations, wherein a diameter of the indentations is at least 1 $\mu$m, preferably at least 3 $\mu$m, more preferably at least 6 $\mu$m, most preferably at least 10 $\mu$m. In addition, or alternatively, the diameter of the indentations may be at most 2 mm, preferably at most 1 mm, more preferably at most 0.5 mm, most preferably at most 0.1 mm.

A porous surface structure comprising a perforated skin layer, e.g., wherein the skin layer comprises indentations, may increase the diffusion coefficient of the midsole of the shoe. In particular, the skin layer of the porous surface structure and/or the midsole may comprise a coating of the midsole. The coating of the midsole may reduce the diffusion of molecules of the gas into the midsole and thereby reduce the deposition of molecules in the midsole. In other words, the skin layer and/or the coating of the porous surface structure may act as a barrier with respect to the diffusion of molecules of the gas into the midsole. Therefore, the indentations may at least partially remove the coating of the midsole and thereby introduce opening in the coating through which the molecules of the gas may diffuse. Furthermore, indentations that extend into the porous surface structure, e.g., indentations comprising a length sufficient to penetrate the skin layer and the porous surface structure, may enlarge a surface of the porous surface structure through which molecules of the gas may diffuse. In some embodiments, the length of the indentations may be at least 1 mm, preferably at least 2 mm, most preferably at least 3 mm.

In addition, or alternatively, at least a part of a skin layer of the at least one porous surface structure has been milled off. A skin of the midsole may at least partially comprise a coating of the midsole. By milling off a part of the skin of the midsole, e.g., a midsole comprising foam and/or a moulded foam midsole, a barrier that limits the diffusion of molecules of the gas may be removed.

In some embodiments, the midsole may comprise foam material. In particular, the foam material may comprise open cell foam. In addition, or alternatively, the foam material may comprise closed cell foam. Specifically, the foam material may comprise ethylene-vinyl acetate. In addition, or alternatively, the foam material may comprise thermoplastic polyurethane. In addition, or alternatively, the foam material may comprise thermoplastic copolyester. In addition, or alternatively, the foam material may comprise polyether block amide. Generally, the foam material may comprise bead foam. In addition, or alternatively, the foam material may comprise block foam. For example, the block foam may be at least partially based on a supercritical fluid foaming process.

In general, at least a part of the at least one porous surface structure of the midsole may be located at a portion of the midsole configured to receive a rearfoot. In addition, or alternatively, at least a part of the at least one porous surface structure of the midsole may be located at a portion of the midsole configured to receive a midfoot. In addition, or alternatively, at least a part of the at least one porous surface structure of the midsole may be located at a portion of the midsole configured to receive forefoot.

At least a part of the at least one porous surface structure of the midsole may be located in a portion of the midsole configured to receive a rearfoot. By locating the part of the porous surface structure in a portion configured to receive a rearfoot, the energy return of the midsole may be locally adapted. For example, by locating the at least part of the porous surface structure in the rearfoot portion of the midsole, the diffusion of molecules of the gas into the rearfoot portion of the midsole may be enhanced. In other words, the number of molecules of the gas deposited in the rearfoot portion of the midsole may be enlarged. In particular, the number of molecules of the gas deposited in the rearfoot portion, i.e., the portion comprising the porous surface structure, may be higher than the number of molecules of the gas deposited in a region of the midsole adapted to receive a forefoot and/or a midfoot. Thereby, adapting the energy return of the shoe and/or midsole may be spatially steered. Spatially steering the energy return of the shoe and/or midsole may comprise a gradient in the energy return across the midsole. By spatially steering the energy return of the shoe and/or midsole the properties of the shoe and/or midsole, e.g., the energy return, may be precisely adapted to the needs of the athlete. Therefore, the performance of the athlete may be optimized.

In addition, or alternatively, at least a part of the at least one porous surface structure of the midsole may be located at a portion of the midsole configured to receive a midfoot. In addition, or alternatively, at least a part of the at least one porous surface structure of the midsole may be located at a portion of the midsole configured to receive a forefoot. Similarly, as above, by locating the part of the porous surface structure in a portion of the midsole adapted to receive a midfoot and/or a forefoot, the energy return of the shoe and/or midsole may be spatially steered. By spatially steering the energy return of the shoe and/or midsole the properties of the shoe and/or midsole, e.g., the energy return, may be precisely adapted to the needs of the athlete. Therefore, the performance of the athlete may be optimized.

In some embodiments, an area of the at least one porous surface structure may be at least 1 cm$^2$, preferably at least 500 cm$^2$, more preferably at least 1000 cm$^2$, even more preferably at least 1500 cm$^2$, most preferably at least 2000 cm$^2$. In addition, or alternatively, the area of the at least one porous surface structure may be at most 3000 cm$^2$, preferably at most 2500 cm$^2$, more preferably at most 2000 cm$^2$, most preferably at most 1500 cm$^2$.

A porous surface structure of at least 1 cm$^2$, preferably at least 500 cm$^2$, more preferably at least 1000 cm$^2$, even more preferably at least 1500 cm$^2$, most preferably at least 2000 cm$^2$ may ensure that a sufficient number of molecules of the gas migrate into the midsole. In particular, the number of molecules that migrate into the midsole may at least partially depend on the size of the porous surface structure. Therefore, a porous surface structure of at least 1 cm$^2$, preferably at least 500 cm$^2$, more preferably at least 1000 cm$^2$, even more preferably at least 1500 cm$^2$, most preferably at least 2000 cm$^2$ may contribute to the adaption of the parameter of the shoe, e.g., the energy return of the shoe. In addition, or alternatively, a sufficiently large porous surface structure may decrease the time period during which the pressurized gas is applied to the midsole.

A fourth aspect of the present invention relates to an apparatus configured to receive a shoe, particularly a sports shoe. The apparatus comprises a sealable chamber configured to receive the shoe and means for increasing a pressure inside the sealable chamber. In particular, the sealable chamber and the means for increasing the pressure are adapted such as to migrate molecules of a gas in a midsole of the shoe.

Generally, the apparatus may be adapted to perform the above-described method. The sealable chamber may comprise two parts. For example, the sealable chamber may comprise a first part configured to receive the shoe and a second part configured to seal the sealable chamber. For example, the first part of the sealable chamber may comprise a screw thread. Similarly, the second part of the sealable chamber may comprise a screw thread mirroring the screw thread of the first part. In particular, the first and the second part of the sealable chamber may be configured such that by screwing the second part onto the first part the first part of the sealable chamber is sealed.

Specifically, the means for increasing the pressure may comprise a first valve, wherein the first valve is adapted to induct the gas into the sealable chamber.

The sealable chamber may comprise a first valve, wherein the valve is adapted to induct the gas into the sealable chamber. For example, the gas may comprise air and/or nitrogen and/or oxygen and/or carbon dioxide. Specifically, the gas may comprise pure nitrogen and/or pure oxygen. In particular, the first valve may be adapted to induct pure oxygen and/or pure nitrogen into the sealable chamber. By inducting the gas through the first valve into the sealable chamber a pressure inside the sealable chamber may increase. In some embodiments, the valve may comprise a check valve. In addition, or alternatively, the means for increasing the pressure may comprise at least two valves. For example, the means for increasing the pressure may comprise at least two check valves.

Specifically, the first valve may be adapted to induct a first gas into the sealable chamber and the second valve may be adapted to induct a second gas into the sealable chamber.

In some embodiments, the means for increasing the pressure may be configured to reduce a volume of the sealable chamber. For example, by reducing the volume of the sealable chamber a pressure inside the sealable chamber may be increased. By increasing the pressure in the sealable chamber, the migration and/or deposition of molecules of the gas in the sealable chamber into the midsole may be increased. By increasing the migration and/or deposition of molecules of the gas into the midsole the energy return of the shoe may be maximized. In some embodiments, the sealable chamber may comprise air. By reducing the volume of the sealable chamber, the pressure of the air inside the sealable chamber may be increased.

The apparatus may further comprise means for controlling a temperature of the sealable chamber, preferably wherein the means for controlling the temperature is/are configured to increase and/or decrease the temperature of the sealable chamber. This allows to set the temperature inside the chamber to a point where optimal absorption of the gas in the midsole occurs.

Generally, the means for increasing the pressure inside the sealable chamber may further be adapted to decrease the pressure inside the sealable chamber. For example, the valve means for increasing the pressure may be configured to effuse molecules of the gas from the sealable chamber, thereby reducing the pressure in the sealable chamber. In some embodiments, the apparatus may comprise a first valve for increasing the pressure inside the sealable chamber and a second valve for decreasing the pressure inside the sealable chamber.

In general, the means for increasing the pressure inside the sealable chamber may be adapted to increase the pressure inside the sealable such that the pressure inside the sealable chamber is at least 1 bar, preferably at least 3 bar, more preferably at least 5 bar, even more preferably at least 7 bar, most preferably at least 9 bar.

Generally, the sealable chamber may comprise a volume of at least 1000 cm$^3$, preferably at least 1300 cm$^3$, more preferably at least 1600 cm$^3$, most preferably at least 2000 cm$^3$. In addition, or alternatively, the sealable chamber may comprise a volume of at least 1.2 times a volume of a midsole of the shoe, preferably at least 1.5 times the volume of the midsole, most preferably at least 2 times the volume of the midsole.

In general, the sealable chamber may comprise a volume such that the sealable chamber is configured to receive at least one shoe, particularly at least one sports shoe. A sealable chamber comprising a volume of at least 1000 cm$^3$, preferably at least 1300 cm$^3$, more preferably at least 1600 cm$^3$, most preferably at least 2000 cm$^3$ may ensure that the volume of the sealable chamber is sufficiently high such that the sealable chamber can receive a shoe. In addition, or alternatively, the sealable chamber may comprise a volume of at least 1.2 times a volume of a midsole of the shoe, preferably at least 1.5 times the volume of the midsole, most preferably at least 2 times the volume of the midsole.

Generally, the apparatus may further comprise means for increasing a temperature inside the sealable chamber. For example, the means for increasing the temperature may comprise a heating plate. Specifically, the means for increasing the temperature inside the sealable chamber may be adapted such that the temperature inside the sealable chamber can be at least 50°C, preferably at least 60°C, more preferably at least 70°C, most preferably at least 80°C. In addition, or alternatively, the apparatus may further comprise means for reducing the temperature inside the sealable chamber.

In some embodiments, the apparatus may further comprise means for coating at least a part of shoe. For example, the means for coating may be adapted such as to coat at least a part of the shoe, e.g., a part of a midsole of the shoe. Specifically, the means for coating may be adapted such as to coat at least a part of the shoe, e.g., a part of the midsole of the shoe, at an increased pressure inside the sealable chamber. For example, the means for coating may be adapted such as to coat at least a part of the shoe at a pressure of at least 1 bar, preferably at least 2 bar, more preferably at least 3 bar, even more preferably at least 4 bar, most preferably at least 5 bar. For example, the at least part of the shoe may be coated after molecules of the gas migrated and/or have been deposited into the midsole of the shoe.

It is noted that any combination of features that have been described above as belonging to certain embodiments/aspects of the present invention is also an embodiment of the present invention, provided such a feature combination is feasible, i.e., does not lead to any contradictions.

Short description of the figures

In the following, exemplary embodiments of the invention are described with reference to the following figures:

Fig. 1A: exemplary illustration of a compression-relaxation cycle and an associated energy return of a shoe and/or midsole;

Fig. 1B: exemplary illustration of the compression and an associated energy loss of a shoe and/or midsole;

Fig. 2: illustration of a weight of the shoe and/or midsole comprising TPU

Fig. 3: illustration of a weight of the shoe and/or midsole comprising TPEE;

Fig. 4: illustration of a weight of the shoe and/or midsole comprising PEBA;

Fig. 5: illustration of a storage modulus of the shoe and/or midsole comprising TPU

Fig. 6: illustration of a storage modulus of the shoe and/or midsole comprising TPEE;

Fig. 7: illustration of a storage modulus of the shoe and/or midsole comprising PEBA;

Fig. 8: illustration of a tensile/damping factor of the shoe and/or midsole comprising TPU;

Fig. 9: illustration of a tensile/damping factor of the shoe and/or midsole comprising TPEE;

Fig. 10: illustration of a tensile/damping factor of the shoe and/or midsole comprising PEBA;

Fig. 11: exemplary illustration of a possible embodiment of a method for adapting a property of a shoe.

Detailed description of preferred embodiments

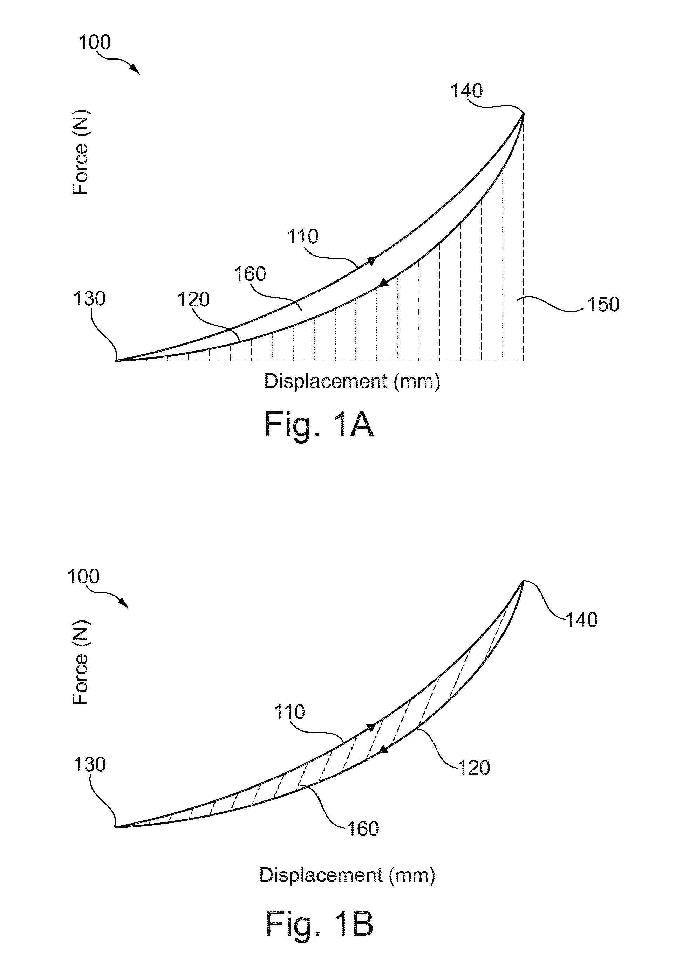

Figure 1A illustrates the present invention by means of a displacement-force diagram 100 a compression-relaxation cycle of a shoe and/or midsole and an energy return associated with at least a part of the compression-relaxation cycle. The force in the displacement-force diagram 100 may refer to a force applied to the shoe and/or midsole. For example, the force may be applied such to the shoe and/or midsole as to induce a compression of the shoe and/or midsole. The displacement in the displacement-force diagram 100 may refer to the displacement of the shoe and/or midsole due to the application of a respective force. For example, the displacement may refer to an amount of compression of the shoe and/or midsole. Specifically, the displacement may comprise a deviation of the shoe and/or midsole from a relaxed state of the shoe and/or midsole. A relaxed state of the shoe and/or midsole may comprise a shoe and/or midsole to which no force is applied.

At the beginning of a compression-relaxation cycle, the shoe and/or the midsole may be in a relaxed state, e.g., no force may be applied to the shoe and/or midsole. For example, the relaxed state may correspond to point 130 in the diagram 100. At point 130, no force is applied to the shoe and/or midsole and the shoe and/or midsole is not displaced. When a force is applied to the shoe and/or midsole, the relaxed state of the shoe and/or midsole may change to a compressed state. In particular, the curve 110 illustrates the dependence of the force and the displacement, when starting from the relaxed state of the shoe and/or midsole. For example, applying the force according to curve 110 to the shoe and/or midsole may transform the shoe and/or midsole from the relaxed state at point 130 to a compressed state at point 140, as illustrated by the arrow in the curve 110. In particular, keeping the shoe and/or the midsole in the compressed state at point 140 may require the application of a force corresponding to the force associated with point 140. Generally, the force associated with point 140 may comprise a projection of the point 140 towards the y-axis of the displacement-force diagram 100. Similarly, a displacement associated with point 140 may comprise a projection of the point 140 towards the x-axis of the displacement-force diagram 100.

At point 140 the shoe and/or midsole may be in a compressed state. Being in a compressed state may comprise that the shoe and/or midsole aims to return to the relaxed state 130. For example, the relaxed state may be energetically favourable. Generally, aiming to return to the relaxed state 130 may comprise that the shoe and/or the midsole exert a force. If the force corresponding to point 140 which keeps the shoe and/or midsole in the compressed state is removed, the shoe and/or midsole may return into the relaxed state 130 by exerting a force according to a curve 120. As illustrated in Fig. 1A, the force exerted by the shoe and/or midsole when changing from the compressed state 140 to the relaxed state 130 (illustrated by the arrow in the curve 120) may be lower than the force that was necessary to transform the shoe and/or midsole from the relaxed state 130 to the compressed state 140. An energy return of the shoe may be based on the work associated with the curve 120. For example, the energy return may comprise an integral of the curve 120. In particular, the integral over the curve may comprise as boundaries the points 130 and/or 140. In other words, the energy return may comprise the area 150 under the curve 120. For example, the area 150 may comprise the work that has been done by the shoe and/or the midsole when transforming from the compressed state 140 to the relaxed state 130. Generally, the energy return, e.g., the area 150, may be associated with an energy.

As illustrated in Fig. 1B, an energy loss of the shoe and/or the midsole may comprise an area 160 between the curve 110 and the curve 120. In particular, the energy loss of the shoe and/or midsole may comprise a difference between the area under the curve 110 and the area under the curve 120. As explained above, the area under the curve 120 may comprise the energy return of the shoe and/or midsole. In other words, the energy loss of the shoe and/or midsole may comprise an energy difference between the energy necessary to transform the shoe from the relaxed state 130 to the compressed state 140 and the energy returned by the shoe and/or midsole when transforming the shoe and/or midsole from the compressed state 140 to the relaxed state 130. For example, the energy loss may comprise energy losses at least partially based on a heat conversion inside the shoe and/or the midsole.

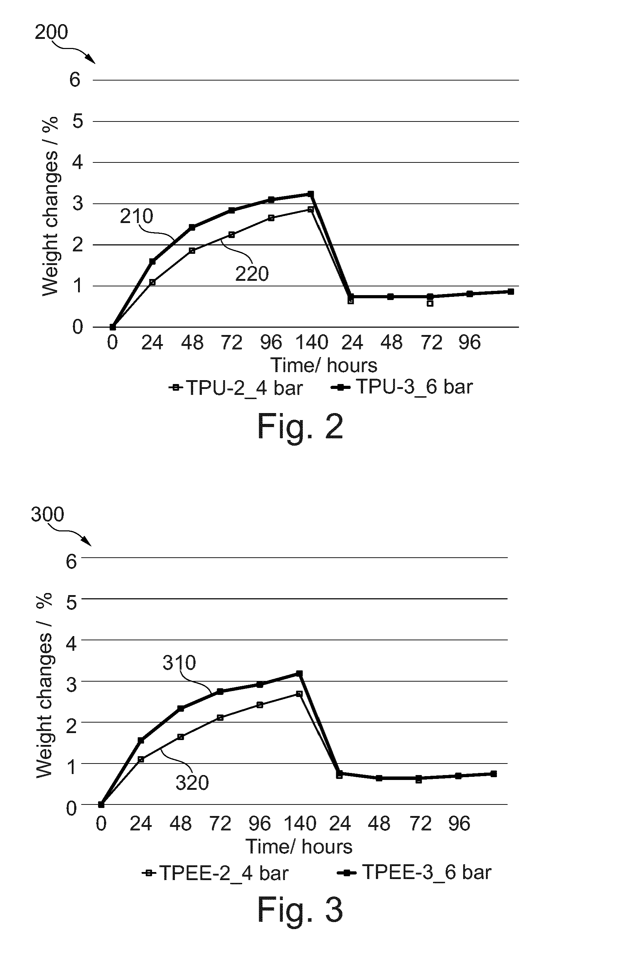

Figure 2 illustrates in a time-weight diagram 200 a change of a weight of the shoe and/or midsole comprising TPU depending on the time period during which the pressurized gas is applied to the shoe and/or midsole. Generally, the x-axis of the diagram 200 is associated with a time during which the pressurized gas is applied. Furthermore, the y-axis of the diagram 200 is associated with a relative change of the weight of the shoe and/or midsole. For example, the relative change of the weight of the shoe and/or the midsole may comprise a ratio between the shoe and/or midsole (immediately) after the pressurized gas has been applied for a time period to the shoe and/or midsole and a reference weight of the shoe and/or midsole. A reference weight of the shoe and/or midsole may comprise a weight of the shoe and/or midsole prior to the application of the pressurized gas.

The diagram 200 comprises two curves 210, 220 which are based on measured data points. In particular, curve 210 illustrates a change of weight of the shoe and/or midsole comprising TPU depending on the time period during which pressurized gas is applied to the shoe and/or the midsole, wherein the gas is applied with a pressure of 6 bar. In addition, curve 220 illustrates a change of weight of the shoe and/or midsole comprising TPU depending on the time period during which pressurized gas is applied to the shoe and/or the midsole, wherein the gas is applied with a pressure of 4 bar. Both curves 210, 220 originate from the same data point, e.g., the point corresponding to the origin of the diagram 200. The origin of the diagram 200 may comprise the point (0,0) indicating that no pressurized gas has been applied and that the weight of the shoe and/or midsole corresponds to the reference weight of the midsole. When the pressurized gas is applied to the midsole, the weight of the midsole increases. In particular, the y-coordinate of the curve 210 and the y-coordinate of the curve 220 increases, when the time period during which the pressurized gas is applied to the shoe and/or midsole increases. With respect to the application of the pressurized gas at a pressure of 4 bar, the curve 220 approximately reaches its maximum after 140 hours. In particular, after 140 hours the weight of the shoe and/or midsole increased by approximately 2.9% of the reference weight. With respect to the application of the pressurized gas at a pressure of 6 bar, the curve 210 approximately reaches its maximum after 140 hours. In particular, after 140 hours the weight of the shoe and/or midsole increased by approximately 3.2% of the reference weight. Generally, the curve 210 may be located above the curve 220. In other words, applying the gas to the shoe and/or midsole at a pressure of 6 bar for a given time period may lead to a larger increase of the weight of the shoe and/or midsole than applying the gas at a pressure of 4 bar for the given time period. In general, an increased weight of the shoe and/or midsole may be at least partially based on molecules of the gas migrated and/or deposited into the midsole of the shoe.

Figure 3 illustrates in a time-weight diagram 300 a change of a weight of the shoe and/or midsole comprising TPEE depending on the time period during which the pressurized gas is applied to the shoe and/or midsole. Generally, the x-axis of the diagram 300 is associated with a time during which the pressurized gas is applied. Furthermore, the y-axis of the diagram 300 is associated with a relative change of the weight of the shoe and/or midsole. For example, the relative change of the weight of the shoe and/or the midsole may comprise a ratio between the shoe and/or midsole (immediately) after the pressurized gas has been applied for a time period to the shoe and/or midsole and a reference weight of the shoe and/or midsole. A reference weight of the shoe and/or midsole may comprise a weight of the shoe and/or midsole prior to the application of the pressurized gas.

The diagram 300 comprises two curves 310, 320 which are based on measured data points. In particular, curve 310 illustrates a change of weight of the shoe and/or midsole comprising TPEE depending on the time period during which pressurized gas is applied to the shoe and/or the midsole, wherein the gas is applied with a pressure of 6 bar. In addition, curve 320 illustrates a change of weight of the shoe and/or midsole comprising TPEE depending on the time period during which pressurized gas is applied to the shoe and/or the midsole, wherein the gas is applied with a pressure of 4 bar. Both curves 310, 320 originate from the same data point, e.g., the point corresponding to the origin of the diagram 300. The origin of the diagram 300 may comprise the point (0,0) indicating that no pressurized gas has been applied and that the weight of the shoe and/or midsole corresponds to the reference weight of the midsole. When the pressurized gas is applied to the midsole, the weight of the midsole increases. In particular, the y-coordinate of the curve 310 and the y-coordinate of the curve 320 increases, when the time period during which the pressurized gas is applied to the shoe and/or midsole increases. With respect to the application of the pressurized gas at a pressure of 4 bar, the curve 320 approximately reaches its maximum after 140 hours. In particular, after 140 hours the weight of the shoe and/or midsole increased by approximately 2.7% of the reference weight. With respect to the application of the pressurized gas at a pressure of 6 bar, the curve 310 approximately reaches its maximum after 140 hours. In particular, after 140 hours the weight of the shoe and/or midsole increased by approximately 3.1% of the reference weight. Generally, the curve 210 may be located above the curve 220. In other words, applying the gas to the shoe and/or midsole at a pressure of 6 bar for a given time period may lead to a larger increase of the weight of the shoe and/or midsole than applying the gas at a pressure of 4 bar for the given time period. In general, an increased weight of the shoe and/or midsole may be at least partially based on molecules of the gas migrated and/or deposited into the midsole of the shoe.

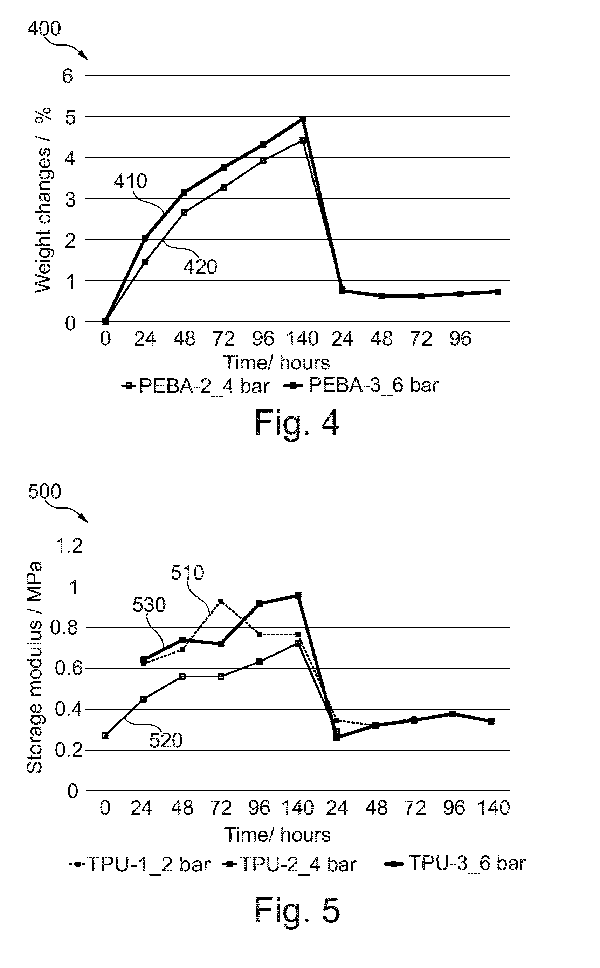

Figure 4 illustrates in a time-weight diagram 400 a change of a weight of the shoe and/or midsole comprising PEBA depending on the time period during which the pressurized gas is applied to the shoe and/or midsole. Generally, the x-axis of the diagram 400 is associated with a time during which the pressurized gas is applied. Furthermore, the y-axis of the diagram 400 is associated with a relative change of the weight of the shoe and/or midsole. For example, the relative change of the weight of the shoe and/or the midsole may comprise a ratio between the shoe and/or midsole (immediately) after the pressurized gas has been applied for a time period to the shoe and/or midsole and a reference weight of the shoe and/or midsole. A reference weight of the shoe and/or midsole may comprise a weight of the shoe and/or midsole prior to the application of the pressurized gas.

The diagram 400 comprises two curves 410, 420 which are based on measured data points. In particular, curve 410 illustrates a change of weight of the shoe and/or midsole comprising PEBA depending on the time period during which pressurized gas is applied to the shoe and/or the midsole, wherein the gas is applied with a pressure of 6 bar. In addition, curve 420 illustrates a change of weight of the shoe and/or midsole comprising PEBA depending on the time period during which pressurized gas is applied to the shoe and/or the midsole, wherein the gas is applied with a pressure of 4 bar. Both curves 410, 420 originate from the same data point, e.g., the point corresponding to the origin of the diagram 400. The origin of the diagram 400 may comprise the point (0,0) indicating that no pressurized gas has been applied and that the weight of the shoe and/or midsole corresponds to the reference weight of the midsole.

When the pressurized gas is applied to the midsole, the weight of the midsole increases. In particular, the y-coordinate of the curve 410 and the y-coordinate of the curve 420 increases, when the time period during which the pressurized gas is applied to the shoe and/or midsole increases. With respect to the application of the pressurized gas at a pressure of 4 bar, the curve 420 approximately reaches its maximum after 140 hours. In particular, after 140 hours the weight of the shoe and/or midsole increased by approximately 4.25% of the reference weight. With respect to the application of the pressurized gas at a pressure of 6 bar, the curve 410 approximately reaches its maximum after 140 hours. In particular, after 140 hours the weight of the shoe and/or midsole increased by approximately 4.95% of the reference weight. Generally, the curve 410 may be located above the curve 420. In other words, applying the gas to the shoe and/or midsole at a pressure of 6 bar for a given time period may lead to a larger increase of the weight of the shoe and/or midsole than applying the gas at a pressure of 4 bar for the given time period. In general, an increased weight of the shoe and/or midsole may be at least partially based on molecules of the gas migrated and/or deposited into the midsole of the shoe.

Figure 5 illustrates in a time-storage modulus diagram 500 a change of the storage modulus of the shoe and/or midsole comprising TPU depending on the time period during which the pressurized gas is applied to the shoe and/or midsole. The x-axis of the diagram 500 is associated with a time period during which the pressurized gas is applied to the shoe and/or the midsole. The y-axis of the diagram 500 is associated with a storage modulus of the shoe and/or midsole. The storage modulus of the shoe and/or midsole may be quantified in MPa (Mega Pascal). The diagram 500 comprises three curves, e.g., the curves 510, 520, 530. In particular, curve 510 illustrates a change of the storage modulus of the shoe and/or midsole comprising TPU depending on the time period during which pressurized gas is applied to the shoe and/or the midsole, wherein the gas is applied with a pressure of 2 bar. In addition, curve 520 illustrates a change of the storage modulus of the shoe and/or midsole comprising TPU depending on the time period during which pressurized gas is applied to the shoe and/or the midsole, wherein the gas is applied with a pressure of 4 bar. In addition, curve 530 illustrates a change of the storage modulus of the shoe and/or midsole comprising TPU depending on the time period during which pressurized gas is applied to the shoe and/or the midsole, wherein the gas is applied with a pressure of 6 bar. The curves 520, 530 comprise essentially increasing curves for time periods in the range between 0 hours and 140 hours. Specifically, the curve 520 comprises a storage modulus of approximately 0.7 MPa for a time period of 140 hours, e.g., after the pressurized gas has been applied to the shoe and/or midsole with a pressure of 4 bar for 140 hours. Similarly, the curve 530 comprises a maximum storage modulus of approximately 0.98 MPa for a time period of 140 hours, e.g., after the pressurized gas has been applied to the shoe and/or midsole with a pressure of 6 bar for 140 hours. The curve 510 comprises a maximal storage modulus value of approximately 0.95 MPa for a time period of approximately 72 hours, e.g., after the pressurized gas has been applied to the shoe and/or midsole with a pressure of 2 bar for 72 hours.

Generally, the increase of the storage modulus of the shoe and/or midsole may be at least partially based on molecules of the gas migrated and/or deposited in the shoe and/or midsole. In particular, the increase of the storage modulus of the shoe and/or midsole may be at least partially correlated to the increase of the weight of the shoe (cf. Fig. 3). Specifically, the increase of the storage modulus may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole.

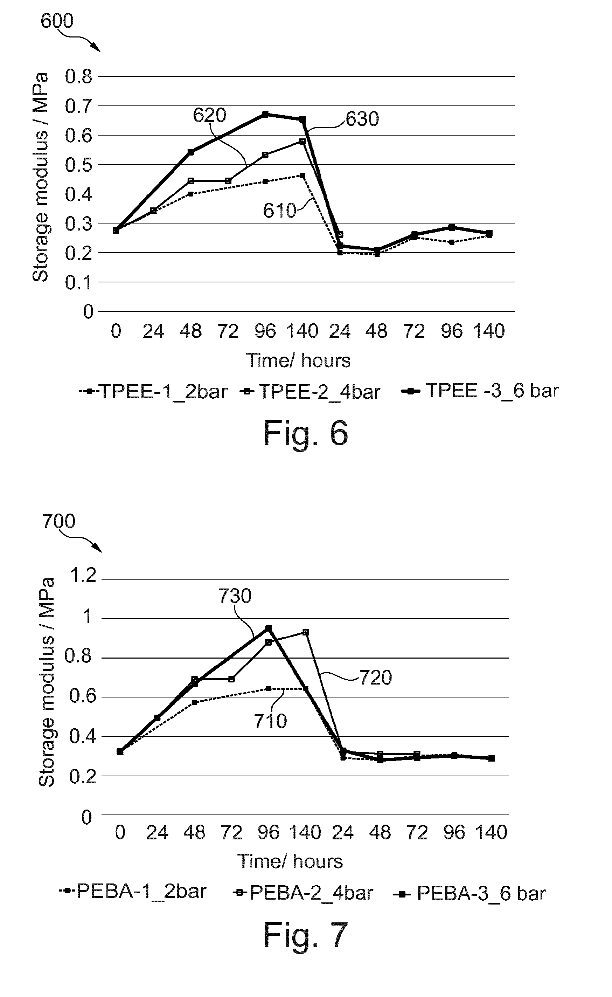

Figure 6 illustrates in a time-storage modulus diagram 600 a change of the storage modulus of the shoe and/or midsole comprising TPEE depending on the time period during which the pressurized gas is applied to the shoe and/or midsole. The x-axis of the diagram 600 is associated with a time period during which the pressurized gas is applied to the shoe and/or the midsole. The y-axis of the diagram 600 is associated with a storage modulus of the shoe and/or midsole. The storage modulus of the shoe and/or midsole may be quantified in MPa (Mega Pascal). The diagram 600 comprises three curves, e.g., the curves 610, 620, 630. In particular, curve 610 illustrates a change of the storage modulus of the shoe and/or midsole comprising TPEE depending on the time period during which pressurized gas is applied to the shoe and/or the midsole, wherein the gas is applied with a pressure of 2 bar. In addition, curve 620 illustrates a change of the storage modulus of the shoe and/or midsole comprising TPEE depending on the time period during which pressurized gas is applied to the shoe and/or the midsole, wherein the gas is applied with a pressure of 4 bar. In addition, curve 630 illustrates a change of the storage modulus of the shoe and/or midsole comprising TPEE depending on the time period during which pressurized gas is applied to the shoe and/or the midsole, wherein the gas is applied with a pressure of 6 bar.

The curve 610 comprises an essentially increasing curve for time periods in the range between 0 hours and 140 hours. Specifically, the curve 610 comprises a storage modulus of approximately 0.45 MPa for a time period of approximately 140 hours, e.g., after the pressurized gas has been applied to the shoe and/or midsole with a pressure of 2 bar for 140 hours. The curve 620 comprises an essentially increasing curve for time periods in the range between 0 hours and 140 hours. Specifically, the curve 620 comprises a storage modulus of approximately 0.59 MPa for a time period of 140 hours, e.g., after the pressurized gas has been applied to the shoe and/or midsole with a pressure of 4 bar for 140 hours. The curve 630 comprises a maximal storage modulus of approximately 0.68 MPa for a time period of approximately 96 hours, e.g., after the pressurized gas has been applied to the shoe and/or midsole with a pressure of 6 bar for 96 hours. For larger time periods, e.g., for time periods in the range between 96 hours and 140 hours the storage modulus of the shoe and/or midsole may decrease. For example, for a time period of 140 hours, the storage modulus of the shoe and/or midsole may decrease to 0.65 MPa.

Generally, the increase of the storage modulus of the shoe and/or midsole may be at least partially based on molecules of the gas migrated and/or deposited in the shoe and/or midsole. In particular, the increase of the storage modulus of the shoe and/or midsole may be at least partially correlated to the increase of the weight of the shoe (cf. Fig. 4). Specifically, the increase of the storage modulus may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole.

Figure 7 illustrates in a time-storage modulus diagram 700 a change of the storage modulus of the shoe and/or midsole comprising PEBA depending on the time period during which the pressurized gas is applied to the shoe and/or midsole. The x-axis of the diagram 700 is associated with a time period during which the pressurized gas is applied to the shoe and/or the midsole. The y-axis of the diagram 700 is associated with a storage modulus of the shoe and/or midsole. The storage modulus of the shoe and/or midsole may be quantified in MPa (Mega Pascal). The diagram 700 comprises three curves, e.g., the curves 710, 720, 730. In particular, curve 710 illustrates a change of the storage modulus of the shoe and/or midsole comprising PEBA depending on the time period during which pressurized gas is applied to the shoe and/or the midsole, wherein the gas is applied with a pressure of 2 bar. In addition, curve 720 illustrates a change of the storage modulus of the shoe and/or midsole comprising PEBA depending on the time period during which pressurized gas is applied to the shoe and/or the midsole, wherein the gas is applied with a pressure of 4 bar. In addition, curve 730 illustrates a change of the storage modulus of the shoe and/or midsole comprising PEBA depending on the time period during which pressurized gas is applied to the shoe and/or the midsole, wherein the gas is applied with a pressure of 6 bar.

The curve 710 comprises an essentially increasing curve for time periods in the range between 0 hours and 140 hours. Specifically, the curve 710 comprises a storage modulus of approximately 0.65 MPa for a time period of approximately 140 hours, e.g., after the pressurized gas has been applied to the shoe and/or midsole with a pressure of 2 bar for 140 hours. The curve 720 comprises an essentially increasing curve for time periods in the range between 0 hours and 140 hours. Specifically, the curve 720 comprises a storage modulus of approximately 0.96 MPa for a time period of 140 hours, e.g., after the pressurized gas has been applied to the shoe and/or midsole with a pressure of 4 bar for 140 hours. The curve 730 comprises a maximal storage modulus of approximately 0.98 MPa for a time period of approximately 96 hours, e.g., after the pressurized gas has been applied to the shoe and/or midsole with a pressure of 6 bar for 96 hours.

Generally, the increase of the storage modulus of the shoe and/or midsole may be at least partially based on molecules of the gas migrated and/or deposited in the shoe and/or midsole. In particular, the increase of the storage modulus of the shoe and/or midsole may be at least partially correlated to the increase of the weight of the shoe (cf.

Fig. 5). Specifically, the increase of the storage modulus may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole.

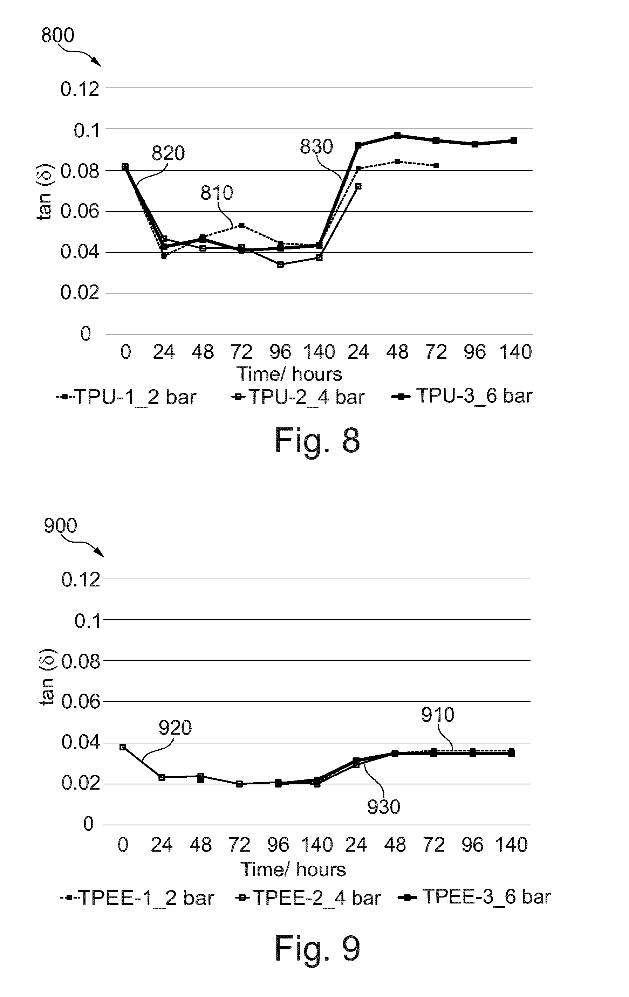

Figure 8 illustrates in a time-tensile diagram 800 a change of the tensile of the shoe and/or midsole comprising TPU depending on the time period during which the pressurized gas is applied to the shoe and/or midsole. The x-axis of the diagram 800 is associated with a time period during which the pressurized gas is applied to the shoe and/or the midsole. The y-axis of the diagram 800 is associated with a tensile and/or damping factor $\tan(\delta)$ of the shoe and/or midsole. The tensile and/or damping factor $\tan(\delta)$ may comprise a dimensionless quantity. The diagram 800 comprises three curves 810, 820, 830. In particular, curve 810 illustrates a change of the tensile and/or damping factor $\tan(\delta)$ of the shoe and/or midsole comprising TPU depending on the time period during which pressurized gas is applied to the shoe and/or the midsole, wherein the gas is applied with a pressure of 2 bar. In addition, curve 820 illustrates a change of the tensile and/or damping factor $\tan(\delta)$ of the shoe and/or midsole comprising TPU depending on the time period during which pressurized gas is applied to the shoe and/or the midsole, wherein the gas is applied with a pressure of 4 bar. In addition, curve 830 illustrates a change of the tensile and/or damping factor $\tan(\delta)$ of the shoe and/or midsole comprising TPU depending on the time period during which pressurized gas is applied to the shoe and/or the midsole, wherein the gas is applied with a pressure of 6 bar.

Curve 810 comprises a decrease in the tensile and/or damping factor $\tan(\delta)$ for a time period of 24 hours. In particular, the tensile and/or damping factor $\tan(\delta)$ drops from an initial tensile and/or damping factor of the shoe and/or midsole of approximately 0.08 to a minimal tensile and/or damping factor $\tan(\delta)$ of approximately 0.04. For time periods in the range between 24 hours to 72 hours, the curve 810 comprises an increase in the tensile and/or damping factor. However, the increase in the tensile and/or damping factor $\tan(\delta)$ for time periods in the range between 24 hours and 72 hours is small such that for all time periods for which the pressurized gas is applied to the shoe and/or midsole the tensile and/or damping factor $\tan(\delta)$ is smaller than the initial tensile and/or damping factor.

Curve 820 comprises an essentially decreasing curve for time periods in the range between 0 hours and 96 hours. In particular, the curve 820 comprises a minimal tensile and/or damping $\tan(\delta)$ of 0.037 for a time period of 96 hours. For time periods in the range between 96 hours and 140 hours, the curve 820 may comprise a (slight) increase of the tensile and/or damping factor of the shoe and/or midsole. However, the increase in the tensile and/or damping factor $\tan(\delta)$ for time periods in the range between 96 hours and 140 hours is small such that for all time periods for which the pressurized gas is applied to the shoe and/or midsole the tensile and/or damping factor $\tan(\delta)$ is smaller than the initial tensile and/or damping factor.

Curve 830 comprises an essentially decreasing curve for time periods in the range between 0 hours and 72 hours. In particular, the curve 830 comprises a minimal tensile and/or damping $\tan(\delta)$ of 0.041 for a time period of 72 hours. For time periods in the range between 72 hours and 140 hours, the curve 830 comprises a (slight) increase in the tensile and/or damping factor $\tan(\delta)$ of the shoe. However, the increase in the tensile and/or damping factor $\tan(\delta)$ for time periods in the range between 72 hours and 140 hours is small such that for all time periods for which the pressurized gas is applied to the shoe and/or midsole the tensile and/or damping factor $\tan(\delta)$ is smaller than the initial tensile and/or damping factor.

Generally, the decrease of the tensile and/or damping factor $\tan(\delta)$ of the shoe and/or midsole may be at least partially based on molecules of the gas migrated and/or deposited in the shoe and/or midsole. In addition, or alternatively, the decrease of the tensile and/or damping factor $\tan(\delta)$ of the shoe and/or midsole may be at least partially based on an increase of the storage modulus of the shoe and/or midsole. In particular, the decrease of the tensile and/or damping factor $\tan(\delta)$ of the shoe and/or midsole may be at least partially correlated to the increase of the weight of the shoe (cf. Fig. 3) and/or an increase in the storage modulus of the shoe (cf. Fig. 5). Specifically, the decrease of the tensile and/or damping factor $\tan(\delta)$ may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole. A higher storage modulus of the shoe and/or midsole may comprise a lower tensile and/or damping factor $\tan(\delta)$ of the shoe. In particular, a lower tensile and/or damping factor $\tan(\delta)$ may at least partially induce a higher energy return of the shoe and/or midsole.

Figure 9 illustrates in a time-tensile diagram 900 a change of the tensile of the shoe and/or midsole comprising TPEE depending on the time period during which the pressurized gas is applied to the shoe and/or midsole. The x-axis of the diagram 900 is associated with a time period during which the pressurized gas is applied to the shoe and/or the midsole. The y-axis of the diagram 900 is associated with a tensile and/or damping factor $\tan(\delta)$ of the shoe and/or midsole. The tensile and/or damping factor $\tan(\delta)$ may comprise a dimensionless quantity. The diagram 900 comprises three curves 910, 920, 930. In particular, curve 910 illustrates a change of the tensile and/or damping factor $\tan(\delta)$ of the shoe and/or midsole comprising TPEE depending on the time period during which pressurized gas is applied to the shoe and/or the midsole, wherein the gas is applied with a pressure of 2 bar. In addition, curve 920 illustrates a change of the tensile and/or damping factor $\tan(\delta)$ of the shoe and/or midsole comprising TPEE depending on the time period during which pressurized gas is applied to the shoe and/or the midsole, wherein the gas is applied with a pressure of 4 bar. In addition, curve 930 illustrates a change of the tensile and/or damping factor $\tan(\delta)$ of the shoe and/or midsole comprising TPEE depending on the time period during which pressurized gas is applied to the shoe and/or the midsole, wherein the gas is applied with a pressure of 6 bar.

The curves 910, 920, 930 comprise essentially decreasing curves for time periods in the range between 0 hours and 96 hours. Furthermore, the curves 910 and 920 comprise essentially decreasing curves for time periods in the range between 96 hours and 140 hours. In other words, the curves 910, 920 comprise essentially decreasing curves for time periods in the range between 0 hours and 140 hours. The curve 930 comprises a (slightly) increasing curve for time periods in the range between 96 hours and 140 hours. For example, the shoe and /or midsole may comprise an initial tensile and/or damping factor $\tan(\delta)$ of approximately 0.04. Specifically, each of the curves 910, 920, 930 may originate with a tensile and/or damping factor $\tan(\delta)$ of 0.04 for a time period of 0 hours. The curve 910 may comprise a minimal tensile and/or damping factor $\tan(\delta)$ of approximately 0.022 for a time period of 140 hours. The curve 920 may comprise a minimal tensile and/or damping factor $\tan(\delta)$ of approximately 0.021 for a time period of 140 hours. The curve 930 may comprise a minimal tensile and/or damping factor $\tan(\delta)$ of approximately 0.021 for a time period of 96 hours.

Generally, the decrease of the tensile and/or damping factor $\tan(\delta)$ of the shoe and/or midsole may be at least partially based on molecules of the gas migrated and/or deposited in the shoe and/or midsole. In addition, or alternatively, the decrease of the tensile and/or damping factor $\tan(\delta)$ of the shoe and/or midsole may be at least partially based on an increase of the storage modulus of the shoe and/or midsole. In particular, the decrease of the tensile and/or damping factor $\tan(\delta)$ of the shoe and/or midsole may be at least partially correlated to the increase of the weight of the shoe (cf. Fig. 4) and/or an increase in the storage modulus of the shoe (cf. Fig. 6). Specifically, the decrease of the tensile and/or damping factor $\tan(\delta)$ may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole. A higher storage modulus of the shoe and/or midsole may comprise a lower tensile and/or damping factor $\tan(\delta)$ of the shoe. In particular, a lower tensile and/or damping factor $\tan(\delta)$ may at least partially induce a higher energy return of the shoe and/or midsole.

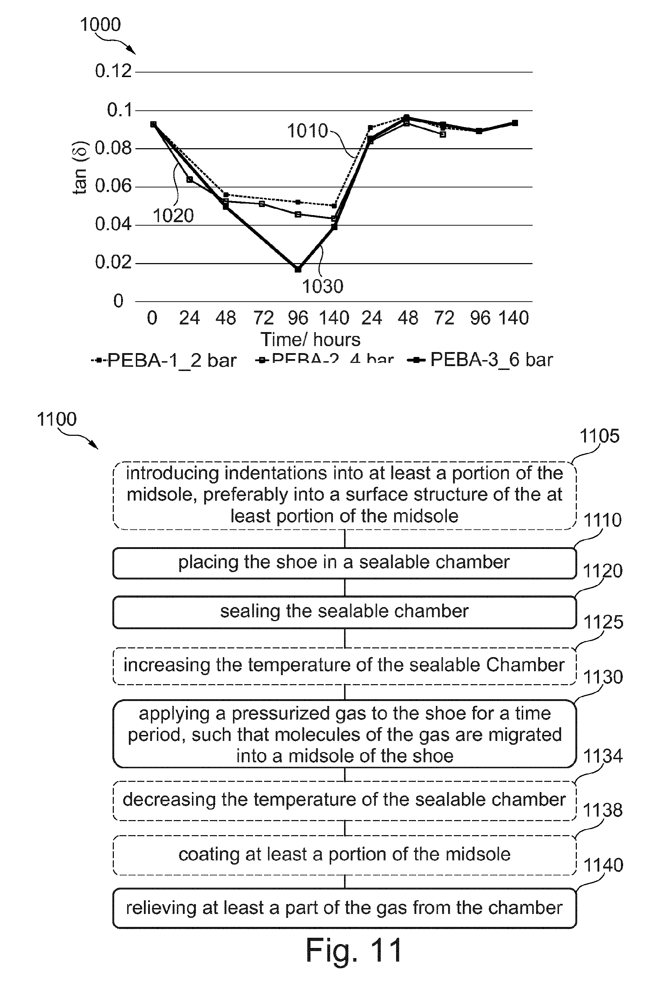

Figure 10 illustrates in a time-tensile diagram 1000 a change of the tensile of the shoe and/or midsole comprising PEBA depending on the time period during which the pressurized gas is applied to the shoe and/or midsole. The x-axis of the diagram 1000 is associated with a time period during which the pressurized gas is applied to the shoe and/or the midsole. The y-axis of the diagram 1000 is associated with a tensile and/or damping factor $\tan(\delta)$ of the shoe and/or midsole. The tensile and/or damping factor $\tan(\delta)$ may comprise a dimensionless quantity. The diagram 1000 comprises three curves 1010, 1020, 1030. In particular, curve 1010 illustrates a change of the tensile and/or damping factor $\tan(\delta)$ of the shoe and/or midsole comprising PEBA depending on the time period during which pressurized gas is applied to the shoe and/or the midsole, wherein the gas is applied with a pressure of 2 bar. In addition, curve 1020 illustrates a change of the tensile and/or damping factor $\tan(\delta)$ of the shoe and/or midsole comprising PEBA depending on the time period during which pressurized gas is applied to the shoe and/or the midsole, wherein the gas is applied with a pressure of 4 bar. In addition, curve 1030 illustrates a change of the tensile and/or damping factor $\tan(\delta)$ of the shoe and/or midsole comprising PEBA depending on the time period during which pressurized gas is applied to the shoe and/or the midsole, wherein the gas is applied with a pressure of 6 bar.

Curves 1010, 1020 comprise essentially decreasing curves for time periods in the range between 0 hours and 140 hours. The curve 1030 comprises an essentially decreasing curve for time periods in the range between 0 hours and 96 hours. In addition, the curve 1030 may comprise an essentially increasing curve for time periods in the range between 96 hours and 140 hours. For example, the curve 1010 may comprise a minimal tensile and/or damping factor tan($\delta$) of approximately 0.055 for a time period of 140 hours. In addition, the curve 1020 may comprise a minimal tensile and/or damping factor tan($\delta$) of approximately 0.042 for a time period of 140 hours. The curve 1030 may comprise a minimal tensile and/or damping factor tan($\delta$) of approximately 0.018 for a time period of 96 hours. For time periods in the range between 96 hours and 140 hours the curve 1030 may increase. For example, the curve 1030 may comprise a tensile and/or damping factor tan($\delta$) of approximately 0.04 for a time period of 140 hours.

Generally, the decrease of the tensile and/or damping factor tan($\delta$) of the shoe and/or midsole may be at least partially based on molecules of the gas migrated and/or deposited in the shoe and/or midsole. In addition, or alternatively, the decrease of the tensile and/or damping factor tan($\delta$) of the shoe and/or midsole may be at least partially based on an increase of the storage modulus of the shoe and/or midsole. In particular, the decrease of the tensile and/or damping factor tan($\delta$) of the shoe and/or midsole may be at least partially correlated to the increase of the weight of the shoe (cf. Fig. 5) and/or an increase in the storage modulus of the shoe (cf. Fig. 7). Specifically, the decrease of the tensile and/or damping factor tan($\delta$) may be at least partially proportional to the migration and/or deposition of molecules of the gas in the shoe and/or midsole. For example, a higher weight of the shoe and/or midsole after the application of the pressurized gas may comprise a higher number of molecules of the gas and/or midsole migrated and/or deposited into the shoe and/or midsole. A higher number of molecules of the gas and/or midsole migrated and/or deposited into the shoe and/or midsole may comprise a higher storage modulus of the shoe and/or midsole. A higher storage modulus of the shoe and/or midsole may comprise a lower tensile and/or damping factor tan($\delta$) of the shoe. In particular, a lower tensile and/or damping factor tan($\delta$) may at least partially induce a higher energy return of the shoe and/or midsole.

Figure 11 illustrates an exemplary embodiment of a method 1100 for adapting a property of a shoe according to the present invention as described above. The method comprises the step of placing 1110 the shoe in a sealable chamber and sealing 1120 the sealable chamber. The method 1100 further comprises applying 1130 a pressurized gas to the shoe for a time period, such that molecules of the gas are migrated into a midsole of the shoe and relieving 1140 at least a part of the gas from the chamber.

Generally, the method 1110 may further comprise the step 1105 of introducing indentations into at least a portion of the midsole. For example, introducing 1105 indentations into at least a portion of the midsole may comprise introducing indentations into a surface structure of the at least portion of the midsole. Specifically, the step of introducing indentations 1105 may be performed prior to the step of placing 1110 the shoe in the sealable chamber. In some embodiments, the step 1105 may be performed after placing 1110 the shoe in the sealable chamber. In addition, or alternatively, the step of introducing indentations 1105 may be performed after sealing 1120 the sealable chamber. For example, the introducing indentations 1105 may comprise introducing indentations into at least a portion of the shoe in the sealable chamber.

In general, the method may further comprise the step of increasing 1125 the temperature of the sealable chamber. Increasing 1125 the temperature of the sealable chamber may comprise to increase a temperature inside the sealable chamber. Specifically, increasing 1125 the temperature of the sealable chamber may enhance the migration and/or deposition of molecules of the gas into the midsole. For example, increasing 1125 the temperature may comprise increasing the temperature such that the temperature is in the range of 30°C to 100°C, preferably in the range of 40°C to 95 °C, more preferably in the range of 50°C to 90°C, even more preferably in the range of 60°C to 85°C, most preferably in the range of 70°C to 80°C. In some embodiments, the step of increasing 1125 the temperature of the sealable chamber may be performed after sealing 1120 the sealable chamber. In addition, or alternatively, the step of increasing 1125 the temperature of the sealable chamber may be performed before applying 1130 the pressurized gas to the shoe.

In addition, or alternatively, the method may further comprise the step of decreasing 1134 the temperature of the sealable chamber. Generally, the step of decreasing 1134 the temperature of the sealable chamber may be performed after applying 1130 the pressurized gas.

Generally, the method 1100 may further comprise the step of coating 1138 at least a portion of the midsole. Specifically, coating 1135 of at least a portion of the midsole may be performed after applying 1130 the pressurized gas to the shoe for a time period. For example, coating 1138 at least a portion of the midsole may be performed at an increased pressure. In addition, or alternatively, the step of coating may be performed at a decreased temperature. In particular, the step of coating 1138 at least a portion of the midsole may be performed before relieving 1140 at least a part of the gas from the chamber. In addition, or alternatively, the step of coating may be performed after decreasing 1134 the temperature of the sealable chamber. Specifically, coating 1138 at least a portion of the midsole may be performed within the sealable chamber.

Further embodiments to facilitate understanding the present disclosure are provided as follows:

    1. Method (1100) for adapting a property, particularly an energy return (150), of a shoe comprising:

        placing (1110) the shoe in a sealable chamber;

sealing (1120) the sealable chamber;
applying (1130) a pressurized gas to the shoe for a time period, such that molecules of the gas are migrated into a midsole of the shoe; and relieving (1140) at least a part of the gas from the chamber.

2. Method (1100) according to embodiment 1, wherein adapting the property of the shoe comprises adapting an elasticity of at least a part of the shoe, preferably an elasticity of the midsole of the shoe.

3. Method (1100) according to embodiment 1 or 2, wherein the midsole of the shoe comprises a foam material.

4. Method (1100) according to embodiment 3, wherein the foam material comprises open cell foam and/or closed cell foam.

5. Method (1100) according to embodiment 3 or 4, wherein the foam material comprises ethylene-vinyl acetate and/or thermoplastic polyurethane and/or thermoplastic copolyester and/or polyether block amide.

6. Method (1100) according to one of the embodiments 3 to 5, wherein the foam material comprises block foam and/or bead foam, preferably wherein the block foam is at least partially based on a supercritical fluid foaming process.

7. Method (1100) according to one of the embodiments 1 to 6, wherein the gas comprises air and/or nitrogen and/or oxygen, preferably pure oxygen, and/or carbon dioxide, and/or helium.

8. Method (1100) according to one of the embodiments 1 to 7, wherein applying (1130) the gas comprises:

applying the gas with a pressure of at least 1 bar, preferably at least 1.5 bar, more preferably at least 2 bar, most preferably at least 2.5 bar; and/or
applying the gas with a pressure of at most 10 bar, preferably at most 9 bar, more preferably at most 8 bar, most preferably at most 7 bar.

9. Method (1100) according to one of the embodiments 1 to 8, wherein applying (1130) the gas comprises applying the gas at a first temperature, preferably wherein the first temperature comprises a temperature in the range of 30°C to 100°C, preferably in the range of 40°C to 95 °C, more preferably in the range of 50°C to 90°C, even more preferably in the range of 60°C to 85°C, most preferably in the range of 70°C to 80°C

10. Method (1100) according to one of the embodiments 1 to 9, wherein:

the time period is at least 4 hours, preferably at least 8 hours, more preferably at least 12 hours, even more preferably at least 16 hours, most preferably at least 20 hours; and/or
the time period is at most 200 hours, preferably at most 180 hours, more preferably at most 160 hours, most preferably at most 140 hours.

11. Method (1100) according to one of the embodiments 1 to 10, further comprising the step of introducing indentations (1105) into at least a portion of the midsole, preferably into a surface structure of the at least portion of the midsole.

12. Method (1100) according to embodiment 11, wherein a diameter of the indentations is at least 1 $\mu$m, preferably at least 3 $\mu$m, more preferably at least 6 $\mu$m, most preferably at least 10 $\mu$m; and/or at most 2 mm, preferably at most 1 mm, more preferably at most 0.5 mm, most preferably at most 0.1 mm.

13. A sports shoe comprising a midsole, wherein the sports shoe, particularly the midsole, was processed by the method (1100) according to one of the embodiments 1 to 12.

14. A sports shoe comprising a midsole adapted to be processed by the method (1100) according to one of the embodiments 1 to 12, wherein the midsole comprises:
at least one porous surface structure, wherein the at least one porous surface structure is configured to absorb and/or to migrate at least a part of the molecules of the gas.

15. Sports shoe according to embodiment 14, wherein the at least one porous surface structure comprises a perforated skin layer.

16. Sports shoe according to embodiment 14 or 15, wherein at least a part of a skin layer of the at least one porous surface structure has been milled off.

17. Sports shoe according to embodiment 15, wherein the perforated skin layer comprises indentations, wherein a diameter of the indentations is at least 1 $\mu$m, preferably at least 3 $\mu$m, more preferably at least 6 $\mu$m, most preferably at least 10 $\mu$m; and/or at most 2 mm, preferably at most 1 mm, more preferably at most 0.5 mm, most preferably at most 0.1 mm.

18. Sports shoe according to embodiment 15 or 17, wherein the midsole comprises foam material, preferably wherein the foam material comprises closed and/or open cell foam, most preferably wherein the foam material comprises ethylene-vinyl acetate and/or thermoplastic polyurethane and/or thermoplastic copolyester and/or polyether block amide.

19. Sports shoe according to one of the embodiments **14** to 17, wherein at least a part of the at least one porous surface structure of the midsole is located at a portion of the midsole configured to a receive a rearfoot and/or a midfoot and/or a forefoot.

20. Sports shoe according to one of the embodiments 14 to 19, wherein an area of the at least one porous surface structure is at least 1 cm$^2$, preferably at least 500 cm$^2$, more preferably at least 1000 cm$^2$, even more preferably at least 1500 cm$^2$, most preferably at least 2000 cm$^2$; and/or wherein an area of the at least one porous surface structure is at most 3000 cm$^2$, preferably at most 2500 cm$^2$, more preferably at most 2000 cm$^2$, most preferably at most 1500 cm$^2$.

21. Apparatus configured to receive a shoe, particularly a sports shoe, comprising:

a sealable chamber configured to receive the shoe;
means for increasing a pressure inside the sealable chamber;
wherein the sealable chamber and the means for increasing the pressure are adapted such as to migrate molecules of a gas in a midsole of the shoe.

22. Apparatus according to embodiment 21, wherein the means for increasing the pressure comprises a first valve, the first valve being adapted to induct the gas into the sealable chamber.

23. Apparatus according to embodiment 21 or 22, wherein the means for increasing the pressure is/are configured to reduce a volume of the sealable chamber.

24. Apparatus according to one of the embodiments 21 to 23, further comprising means for controlling a temperature of the sealable chamber, preferably wherein the means for controlling the temperature is/are configured to increase and/or decrease the temperature of the sealable chamber.

25. Apparatus according to one of the embodiments 21 to 23, wherein the sealable chamber comprises a volume of:
at least 1000 cm$^3$, preferably at least 1300 cm$^3$, more preferably at least 1600 cm$^3$, most preferably at least 2000 cm$^3$; and/or at least 1.2 times a volume of a midsole of the shoe, preferably at least 1.5 times the volume of the midsole, most preferably at least 2 times the volume of the midsole.

## Claims

1. Method (1100) for adapting a property, particularly an energy return (150), of a shoe comprising:

placing (1110) the shoe in a sealable chamber;
sealing (1120) the sealable chamber;
applying (1130) a pressurized gas to the shoe for a time period, such that molecules of the gas are migrated into a midsole of the shoe; and
relieving (1140) at least a part of the gas from the chamber.

2. Method (1100) according to claim 1, wherein adapting the property of the shoe comprises adapting an elasticity of at least a part of the shoe, preferably an elasticity of the midsole of the shoe.

3. Method (1100) according to claim 1 or 2, wherein the midsole of the shoe comprises a foam material, preferably,

wherein the foam material comprises open cell foam and/or closed cell foam, and/or,
wherein the foam material comprises ethylene-vinyl acetate and/or thermoplastic polyurethane and/or thermoplastic copolyester and/or polyether block amide and/or,
wherein the foam material comprises block foam and/or bead foam, preferably wherein the block foam is at least partially based on a supercritical fluid foaming process.

4. Method (1100) according to one of the claims 1 to 3, wherein the gas comprises air and/or nitrogen and/or oxygen, preferably pure oxygen, and/or carbon dioxide, and/or helium, and/or wherein applying (1130) the gas comprises:

applying the gas with a pressure of at least 1 bar, preferably at least 1.5 bar, more preferably at least 2 bar, most preferably at least 2.5 bar; and/or
applying the gas with a pressure of at most 10 bar, preferably at most 9 bar, more preferably at most 8 bar, most preferably at most 7 bar;
and/or applying the gas at a first temperature, preferably wherein the first temperature comprises a temperature in the range of 30°C to 100°C,
preferably in the range of 40°C to 95 °C, more preferably in the range of 50°C to 90°C, even more preferably in the range of 60°C to 85°C, most preferably in the range of 70°C to 80°C.

5. Method (1100) according to one of the claims 1 to 4, wherein:

> the time period is at least 4 hours, preferably at least 8 hours, more preferably at least 12 hours, even more preferably at least 16 hours, most preferably at least 20 hours; and/or
> the time period is at most 200 hours, preferably at most 180 hours, more preferably at most 160 hours, most preferably at most 140 hours.

6. Method (1100) according to one of the claims 1 to 5, further comprising the step of introducing indentations (1105) into at least a portion of the midsole, preferably into a surface structure of the at least portion of the midsole, preferably
wherein a diameter of the indentations is at least 1 $\mu$m, preferably at least 3 $\mu$m, more preferably at least 6 $\mu$m, most preferably at least 10 $\mu$m; and/or at most 2 mm, preferably at most 1 mm, more preferably at most 0.5 mm, most preferably at most 0.1 mm.

7. A sports shoe comprising a midsole, wherein the sports shoe, particularly the midsole, was processed by the method (1100) according to one of the claims 1 to 6.

8. A sports shoe comprising a midsole adapted to be processed by the method (1100) according to one of the claims 1 to 6, wherein the midsole comprises:
at least one porous surface structure, wherein the at least one porous surface structure is configured to absorb and/or to migrate at least a part of the molecules of the gas.

9. Sports shoe according to claim 8,

> wherein the at least one porous surface structure comprises a perforated skin layer, and/or
> wherein at least a part of a skin layer of the at least one porous surface structure has been milled off, and/or
> wherein the perforated skin layer comprises indentations, wherein a diameter of the indentations is at least 1 $\mu$m, preferably at least 3 $\mu$m, more preferably at least 6 $\mu$m, most preferably at least 10 $\mu$m; and/or at most 2 mm, preferably at most 1 mm, more preferably at most 0.5 mm, most preferably at most 0.1 mm, and/or
> wherein the midsole comprises foam material, preferably wherein the foam material comprises closed and/or open cell foam, most preferably wherein the foam material comprises ethylene-vinyl acetate and/or thermoplastic polyurethane and/or thermoplastic copolyester and/or polyether block amide.

10. Sports shoe according to one of the claims 7 to 9, wherein at least a part of the at least one porous surface structure of the midsole is located at a portion of the midsole configured to a receive a rearfoot and/or a midfoot and/or a forefoot.

11. Sports shoe according to one of the claims 7 to 10, wherein an area of the at least one porous surface structure is at least 1 $cm^2$, preferably at least 500 $cm^2$, more preferably at least 1000 $cm^2$, even more preferably at least 1500 $cm^2$, most preferably at least 2000 $cm^2$; and/or wherein an area of the at least one porous surface structure is at most 3000 $cm^2$, preferably at most 2500 $cm^2$, more preferably at most 2000 $cm^2$, most preferably at most 1500 $cm^2$.

12. Apparatus configured to receive a shoe, particularly a sports shoe, comprising:

> a sealable chamber configured to receive the shoe;
> means for increasing a pressure inside the sealable chamber;
> wherein the sealable chamber and the means for increasing the pressure are adapted such as to migrate molecules of a gas in a midsole of the shoe.

13. Apparatus according to claim 12, wherein the means for increasing the pressure comprises a first valve, the first valve being adapted to induct the gas into the sealable chamber, and/or, wherein the means for increasing the pressure is/are configured to reduce a volume of the sealable chamber.

14. Apparatus according to one of the claims 12 to 13, further comprising means for controlling a temperature of the sealable chamber, preferably wherein the means for controlling the temperature is/are configured to increase and/or decrease the temperature of the sealable chamber.

15. Apparatus according to one of the claims 12 to 14, wherein the sealable chamber comprises a volume of:

> at least 1000 $cm^3$, preferably at least 1300 $cm^3$, more preferably at least 1600 $cm^3$, most preferably at least 2000 $cm^3$; and/or
> at least 1.2 times a volume of a midsole of the shoe, preferably at least 1.5 times the volume of the midsole, most preferably at least 2 times the volume of the midsole.

Fig. 1A

Fig. 1B

Fig. 2

Fig. 3

Fig. 4

Fig. 5

Fig. 6

Fig. 7

Fig. 8

Fig. 9

1000

0.12

0.1

0.08

tan (δ)

0.06

0.04

0.02

0

1010

1020

1030

0   24   48   72   96  140   24   48   72   96  140
Time/ hours

-■-PEBA-1_2 bar   -■-PEBA-2_4 bar   -■-PEBA-3_6 bar

1100

introducing indentations into at least a portion of the midsole, preferably into a surface structure of the at least portion of the midsole — 1105

placing the shoe in a sealable chamber — 1110

sealing the sealable chamber — 1120

increasing the temperature of the sealable Chamber — 1125

applying a pressurized gas to the shoe for a time period, such that molecules of the gas are migrated into a midsole of the shoe — 1130

decreasing the temperature of the sealable chamber — 1134

coating at least a portion of the midsole — 1138

relieving at least a part of the gas from the chamber — 1140

Fig. 11

Europäisches
Patentamt

European
Patent Office

Office européen
des brevets

# EUROPEAN SEARCH REPORT

**Application Number**

EP 25 18 6579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/013912 A1 (MARSCHALL URSULA [DE] ET AL) 19 January 2017 (2017-01-19) <br> * paragraph [0007] - paragraph [0008] * <br> * paragraph [0015] - paragraph [0022] * <br> * figures * <br> ----- | 1-6 | INV. <br> A43B13/04 <br> A43B13/12 <br> A43B13/18 <br> A43B13/20 <br> A43D999/00 <br> A43D95/10 |
| X | EP 3 598 913 B1 (ADIDAS AG [DE]) 27 October 2021 (2021-10-27) <br> * paragraph [0063] - paragraph [0075] * <br> * figure 8 * <br> ----- | 7-11 | |
| A | RU 2 702 641 C1 (GORBATOVSKIJ PAVEL VALEREVICH [RU]) 9 October 2019 (2019-10-09) <br> * the whole document * <br> ----- | 12-15 | |

| TECHNICAL FIELDS SEARCHED (IPC) |
|---|
| A43B <br> A43D |

The present search report has been drawn up for all claims

| Place of search | Date of completion of the search | Examiner |
|---|---|---|
| The Hague | 25 September 2025 | Ariza De Miguel, Jon |

EPO FORM 1503 03.82 (P04C01)

## ANNEX TO THE EUROPEAN SEARCH REPORT
## ON EUROPEAN PATENT APPLICATION NO.

EP 25 18 6579

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2025

| Patent document cited in search report | Publication date | Patent family member(s) | Publication date |
|---|---|---|---|
| US 2017013912 A1 | 19-01-2017 | CN 106163314 A | 23-11-2016 |
| | | DE 102014003017 A1 | 10-09-2015 |
| | | EP 3113641 A1 | 11-01-2017 |
| | | ES 2924194 T3 | 05-10-2022 |
| | | JP 6860347 B2 | 14-04-2021 |
| | | JP 2017506990 A | 16-03-2017 |
| | | PT 3113641 T | 12-08-2022 |
| | | RU 2016139250 A | 13-04-2018 |
| | | US 2017013912 A1 | 19-01-2017 |
| | | WO 2015132400 A1 | 11-09-2015 |
| EP 3598913 B1 | 27-10-2021 | CN 103976504 A | 13-08-2014 |
| | | CN 108209024 A | 29-06-2018 |
| | | DE 102013202291 A1 | 14-08-2014 |
| | | EP 2767183 A1 | 20-08-2014 |
| | | EP 3132703 A1 | 22-02-2017 |
| | | EP 3598913 A1 | 29-01-2020 |
| | | EP 3970548 A1 | 23-03-2022 |
| | | JP 6612488 B2 | 27-11-2019 |
| | | JP 7252112 B2 | 04-04-2023 |
| | | JP 7381785 B2 | 16-11-2023 |
| | | JP 7644804 B2 | 12-03-2025 |
| | | JP 2014151202 A | 25-08-2014 |
| | | JP 2020036903 A | 12-03-2020 |
| | | JP 2023061965 A | 02-05-2023 |
| | | JP 2024001334 A | 09-01-2024 |
| | | US 2014223776 A1 | 14-08-2014 |
| | | US 2018000197 A1 | 04-01-2018 |
| | | US 2020113280 A1 | 16-04-2020 |
| | | US 2022079288 A1 | 17-03-2022 |
| | | US 2025160480 A1 | 22-05-2025 |
| RU 2702641 C1 | 09-10-2019 | NONE | |

EPO FORM P0459

For more details about this annex : see Official Journal of the European Patent Office, No. 12/82

**EP 4 674 304 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20240148107 A1
- US 20240017509 A1
- GB 2227921 A